(19) **Europäisches Patentamt / European Patent Office / Office européen des brevets**

(11) **EP 1 653 427 B1**

(12) **EUROPEAN PATENT SPECIFICATION**

(45) Date of publication and mention of the grant of the patent:
**09.07.2014 Bulletin 2014/28**

(51) Int Cl.:
***G01C 21/26*** (2006.01)  ***G01C 21/30*** (2006.01)
***G08G 1/0969*** (2006.01)

(21) Application number: **04771479.5**

(22) Date of filing: **04.08.2004**

(86) International application number:
**PCT/JP2004/011492**

(87) International publication number:
**WO 2005/013242 (10.02.2005 Gazette 2005/06)**

(54) **DIGITAL MAP POSITION INFORMATION COMMUNICATION METHOD, PROGRAM FOR EXECUTING THE SAME, PROGRAM PRODUCT THEREFOR, SYSTEM THEREFOR, AND APPARATUS THEREFOR**

VERFAHREN ZUR ÜBERMITTLUNG VON POSITIONSINFORMATIONEN EINER DIGITALEN LANDKARTE, PROGRAMM ZU SEINER AUSFÜHRUNG, PROGRAMMPRODUKT DAFÜR, SYSTEM DAFÜR UND VORRICHTUNG DAFÜR

PROCEDE DE COMMUNICATION D'INFORMATION DE POSITION SUR UNE CARTE NUMERIQUE, PROGRAMME PERMETTANT LA MISE EN OEUVRE DE CE PROCEDE, PRODUIT RELATIF A CE PROGRAMME, SYSTEME ET APPAREIL CORRESPONDANTS

(84) Designated Contracting States:
**DE FR GB**

(30) Priority: **04.08.2003  JP 2003285807**
**04.02.2004  JP 2004028040**

(43) Date of publication of application:
**03.05.2006  Bulletin 2006/18**

(73) Proprietor: **Panasonic Corporation**
**Kadoma-shi**
**Osaka 571-8501 (JP)**

(72) Inventor: **ADACHI, Shinya**
**Yokohama-shi**
**Kanagawa 227-0038 (JP)**

(74) Representative: **Pautex Schneider, Nicole Véronique et al**
**Novagraaf International SA**
**Chemin de l'Echo 3**
**1213 Onex (CH)**

(56) References cited:
**EP-A- 1 182 611    EP-A- 1 492 072**
**WO-A-01/18769    JP-A- 2002 162 241**
**JP-A- 2002 228 468    JP-A- 2002 328 033**

**Description**

TECHNICAL FIELD

The present invention relates to a positional information transmission method for transmitting road positions on a digital map such as an object road of traffic information or a recommended route to a destination, and a program, a program product, a system and a device for executing the method, thereby to make it possible to transmit road positions precisely.

BACKGROUND ART

Conventionally, the VICS (Vehicle Information and Communication System) provides services for providing road traffic information indicating the delay section and travel time through an FM multiplex broadcasting or beacon to a vehicular navigation device carrying a digital map database. The vehicular navigation device receives that road traffic information thereby to display the delay section in colors on a map displayed on a screen and to calculate and display the time period to reach the destination.

In case the road traffic information is thus provided, it is necessary to transmit the positional information of the road on the digital map. In the services for providing the information of a recommended route to reach the destination for the shortest time by receiving the information on the current place or the destination or in the road traffic information collection system (or the probe information collection system) for collecting the path information or speed information from a running vehicle (or a probe car) to exploit the collected information for creating the traffic information, it is necessary to transmit the recommended route or the traveled path on the digital map to the customer.

In the VICS, the road section is specified using the link number assigned to the road or the node number indicating a node such as a point of intersection.

The digital map data are made different in the data contents depending on its production company so that the scaled map never fails to have different data representing the road positions. Moreover, some map represents a trunk road in two lines of up and down roads, and another represents the trunk in one line. Here, the information of the link number and the node number used in the VICS are commonly contained in the digital map data of the individual producers. In the VICS, therefore, the road section can be precisely transmitted irrespective of the differences of the producers of the digital map data.

However, the node number and the link number defined in the road net have to be renumbered according to the renewal or change of the road so that the digital map data of the individual producers have to be accordingly updated. Therefore, the system using the node number and the link number takes a remarkable social cost for its maintenance.

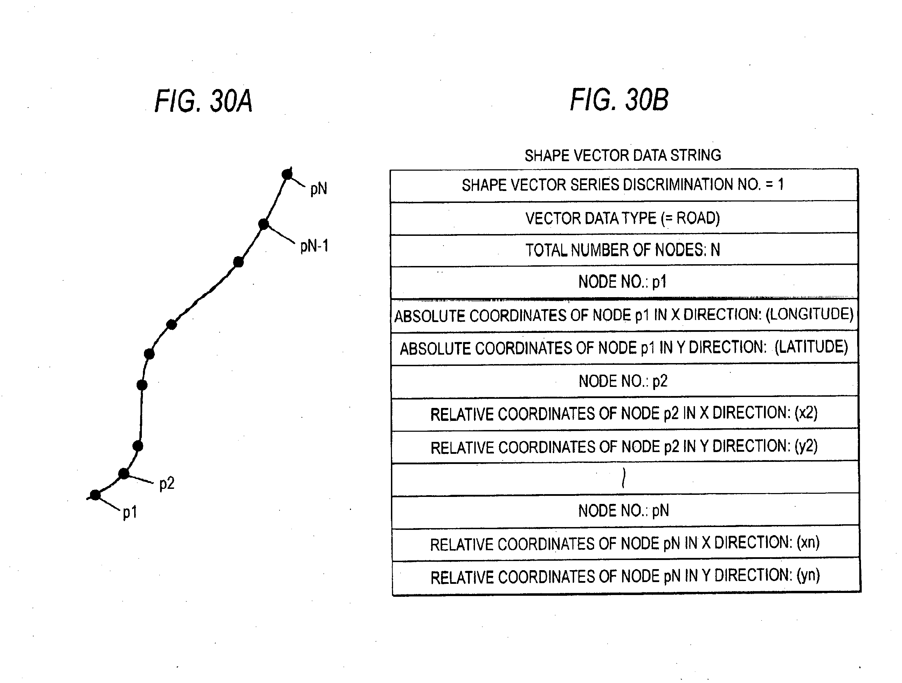

In order to improve those points, JP-A-2001-041757 has proposed a method for transmitting the road position on the digital map without using the common node number or link number. In this method, a plurality of nodes p1, p2, - - -, and pN are set in a road section to be transmitted on the digital map of the transmission side, as shown in Fig. 30(a). These nodes can be exemplified by the nodes or interpolation points, which are set in the digital map data on the transmission side. As shown in Fig. 30(b), moreover, the "road shape data", in which the plural nodes p1, p2, - - -, and pN are arrayed, are transmitted to the reception side. On the other hand, the reception side identifies the location of the individual node positions contained in the road shape data, on its own digital map thereby to specify the road section.

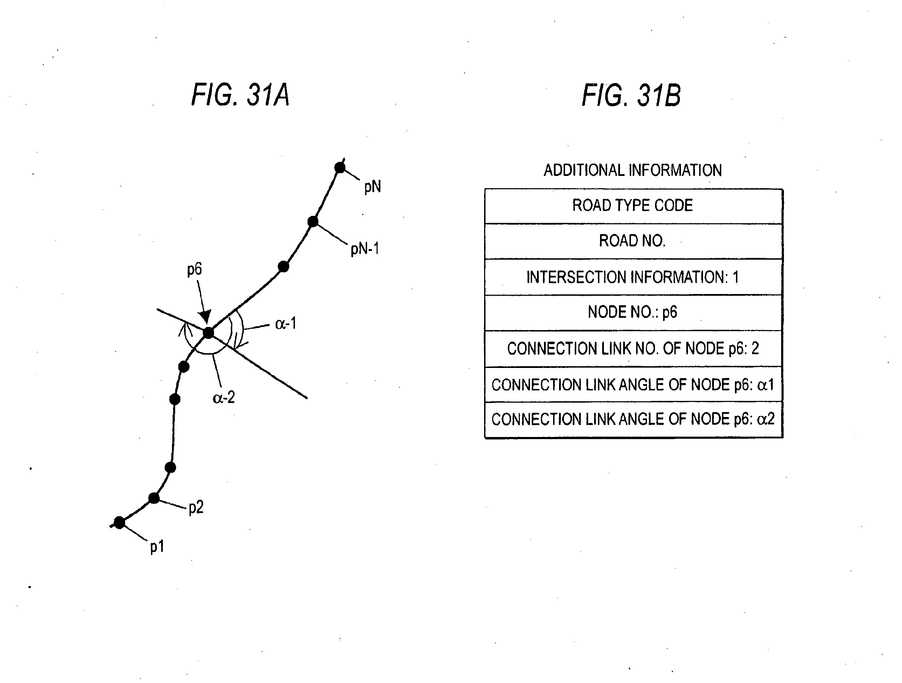

In order to facilitate the procedure on the reception side, on the other hand, JP-A-2001-066146 proposes that, in case a node p6 of a point of intersection is contained in the nodes set in the road section, as shown in Fig. 31 (a), the information on the number and the connection angles a: 1 and $\alpha 2$ of the links to be connected to that node p6 is transmitted as additional information (Fig. 31 (b)) together with transmission data of Fig. 30(b).

Moreover, JP-A-2003-023357 proposes a method, by which the road shape data are compressed and encoded to reduce the quantity of data. In this method, sampling points are reset at an interval of a constant distance on a road section to be transmitted (as called the "equidistance re-sample"), and the position data of the individual sampling points excepting the starting end are expressed by either a deflection angle $\theta j$ from the adjoining sampling point or a differential value $\Delta \theta j$ of statistical predicted value (i.e., the difference between the predicted value predicted by using the deflection angle $\theta j$ and the deflection angles ($\theta j-1$, $\theta j-2$, - - -, and so on) and the actual deflection angle $\theta j$) and are encoded to variable long codes. These encoded data and the latitude/longitude data of the starting end are transmitted to the reception side. The reception side decodes the encoded data and restores the position data of the individual sampling points thereby to specify the road section.

In the positional information transmission method, in which the transmission side transmits the road shape data and in which the reception side conduct the location identification to specify the road section, the reception side may specify the erroneous place at a parallel road or at a branching portion of a small angle. Especially in the place where a highway and a general road take a multi-layered structure or at a branching portion from the trunk such as an interchange or a transfer ramp/ connection road, a mistaken place is highly probably specified. As to the multi-structure, by referring the "road type code" which is described in JP-A-2001-066146, the probability of erring the location identifications can be drastically reduced since the multi-layered roads are hardly composed of roads of the same type. However, this method is not effective means at the branching portion from the trunk such as the transfer ramp or the connection road, because roads of the same type run adjacent and parallel to the trunk. Especially, in case one map represents the road in two lines of up and down roads whereas another map represents the road in one line of two ways, the error in the location identification frequently occurs when the positional information is transmitted between the two maps.

The document WO 01/18769 A describes encoding positional information for transmission from a transmission side to a reception side by creating, on the transmission side, position information based on object road shape data of a transmission object road and assistance shape data of a road to be connected to the object road .The position information data are then transmitted from the transmission side to the reception side. At the reception side, the object road shape data and assistance shape data from the received position codes are separated and the object road shape data are used to specify the object road on a digital map.

## DISCLOSURE OF THE INVENTION

The present invention has an object to provide a positional information transmission method capable of preventing an error in the location identifications on the reception side, to which road shape data of an object road are transmitted, and a program, a program product, a system and a device for executing the method.

According to the invention, there is provided a system, a transmission device, a reception device, a transmission method, a reception method, a transmisssion program and a reception program as defined in claims 1 to 7.

## BRIEF DESCRIPTION OF THE DRAWINGS

Fig. 1 presents diagrams for explaining object roads and branches to be transmitted by a positional information transmission method in a first embodiment of the invention;

Fig. 2 presents diagrams for explaining another example of the object roads and branches to be transmitted by the positional information transmission method in the first embodiment of the invention;

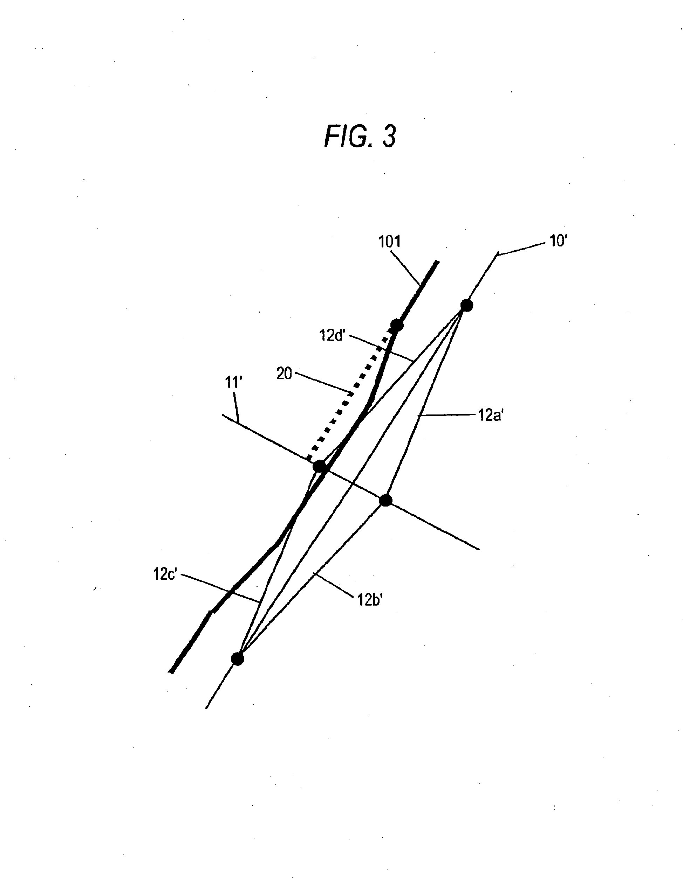

Fig. 3 is a diagram for explaining a location identification in the first embodiment of the invention;

Fig. 4 presents diagrams showing the object road candidates obtained by the location identification in the first embodiment of the invention;

Fig. 5 presents diagrams showing the object road candidates to be excluded from the object in the branch location identification in the first embodiment of the invention;

Fig. 6 presents diagrams showing the branch candidates obtained in the branch location identification in the first embodiment of the invention;

Fig. 7 presents diagrams showing the object road candidate and the branch candidate obtained by the location identification in the first embodiment of the invention;

Fig. 8 presents diagrams for explaining a method for locating the object road candidate in the first embodiment of the invention;

Fig. 9 presents the object road candidate identified by location identification and the original shape in the first embodiment of the invention;

Fig. 10 is a diagram showing branches to be transmitted by a location information transmission method in the first embodiment of the invention;

Fig. 11 is a block diagram showing a configuration of a positional information transmission system in the first embodiment of the invention;

Fig. 12 is a flow diagram showing the operations of the transmission side of the positional information transmission system in the first embodiment of the invention;

Fig. 13 is a diagram for explaining the object road and the branches to be transmitted by the positional information transmission system in the first embodiment of the invention;

Fig. 14 is a diagram showing shape data to be transmitted by the positional information transmission system in the first embodiment of the invention;

Fig. 15 is a flow chart showing the operations of the reception side of the positional information transmission system in the first embodiment of the invention;

Fig. 16 presents diagrams for explaining a method for evaluating the location identification results on the reception side of the positional information transmission system in the first embodiment of the invention;

Fig. 17 presents diagrams for explaining a method for evaluating a location identification result in a second embodiment of the invention;

Fig. 18 presents diagrams for explaining a method for evaluating a location identification result in a third embodiment of the invention;

Fig. 19 presents diagrams showing shape data in the third embodiment of the invention;

Fig. 20 presents diagrams showing shape data in a fourth embodiment of the invention;

Fig. 21 presents diagrams showing a location identification method in the fourth embodiment of the invention;

Fig. 22 presents diagrams showing shape data in a fifth embodiment of the invention;

Fig. 23 is a diagram for explaining the differences in the road shape between maps of different scales;

Fig. 24 is a diagram for explaining a location identification method in a sixth embodiment of the invention;

Fig. 25 presents diagrams for explaining a branch shape correcting operation in the sixth embodiment of the invention;

Fig. 26 is a flow chart showing a branch shape correcting procedure in the sixth embodiment of the invention;

Fig. 27 presents diagrams contrasting the case (b), in which the reception side displays an event position without correction of a branching position, and the case (c), in which the event position is displayed on the basis of the branching position corrected by the method in the sixth embodiment of the invention;

Fig. 28 presents diagrams for explaining a road shape adding operation in the sixth embodiment of the invention;

Fig. 29 is a flow chart showing a shape data creating operation on the transmission side in the sixth embodiment of the invention;

Fig. 30 presents diagrams showing the shape data to be transmitted by the positional information transmission method of the prior art;

Fig. 31 presents diagrams showing another example of the shape data to be transmitted by the positional information transmission method of the prior art;

Fig. 32 presents diagrams for explaining maps representing a grade-separation intersection road in a double-line representation form;

Fig. 33 is a diagram for explaining a map representing a grade-separation intersection road in a single-line representation form;

Fig. 34 presents diagrams for explaining the location identifications in maps of different representation forms;

Fig. 35 is a diagram showing the result of an erroneous location identification;

Fig. 36 is a diagram showing a modification of the shape data of Fig. 14;

Fig. 37 presents diagrams showing locating procedure on the transmission side and on the reception side in a seventh embodiment of the invention;

Fig. 38 presents diagrams showing a shape correction of a section absent from the reception side in the seventh embodiment of the invention;

Fig. 39 is an example of a digital map, to which an eighth embodiment of the invention is applied;

Fig. 40 is a diagram showing such a connection road to an object road as is used as assistance shape data, in the eighth embodiment of the invention; and

Fig. 41 is a flow chart showing the operations of the reception side of the positional information transmission system in the ninth embodiment of the invention.

BEST MODE FOR CARRYING OUT THE INVENTION

(First Embodiment)

In a positional information transmission method of an embodiment of the invention, a transmission side transmits not only a road shape data of an object road at which error of the location identification tends to occur but also shape data of either a branching portion of a road branched at a predetermined angle from the object road or a portion which intersects with the object road (both the places will be called together the "branch") as assistance information or reference information. In short, the "branch" is a road (or a connection road) connected to a road of a main object to be transmitted (i.e., the object road). The reception side specifies the object road with reference to the branch shape at time of the location identification. The "location identification" defines an act of specifying the position of the object road on a digital map or identifying the corresponding road on the digital map. This also includes a concept of so-called "map matching and the "pattern matching". The shape data of the above-described branch is generally called the "assistance shape data" and "reference shape data", and includes a concept of so-called "branch shape data". These "assistance shape data" and "reference shape data" are the concept of the data for a specific assistance or reference of the object road, i.e., the main object of the location identification. The following description uses the terminology of the "branch shape data", which can be extended to the concept of the "assistance shape data" or the "reference shape data".

Here is described an example of the case, in which the invention is especially useful.

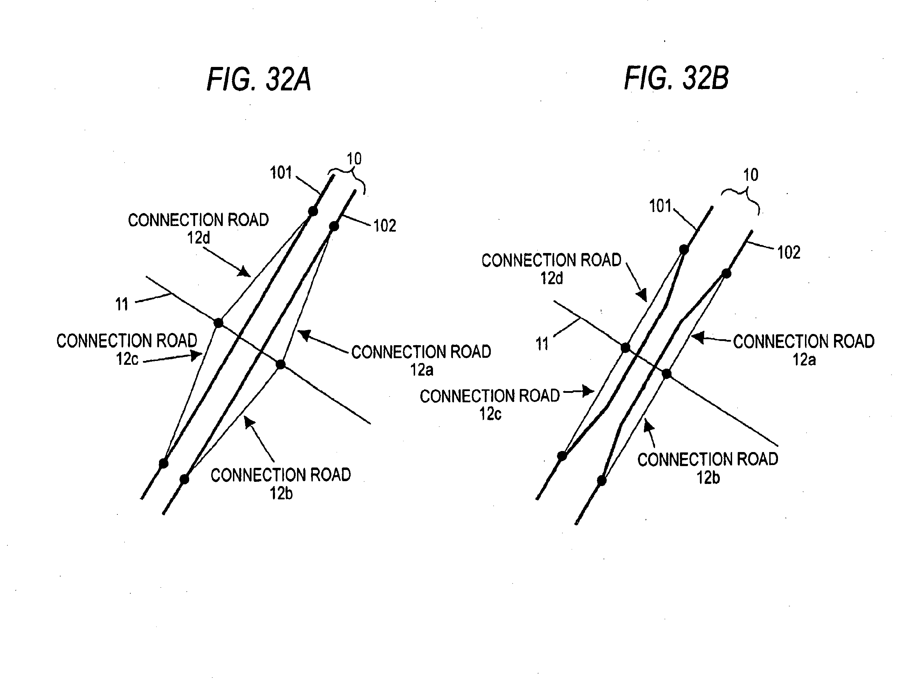

In a digital map representing trunks in double lines, as shown in Fig. 32(a), roads are displayed by: a trunk 10 composed of double lines of an up road 102 and a down road 102; a road 11 passing below the trunk 10 at a grade-separation point; and transfer ramps 12a, 12b, 12c and 12d connecting the trunk 10 and the road 11. Alternatively, the roads are displayed, as shown in Fig. 32(b).

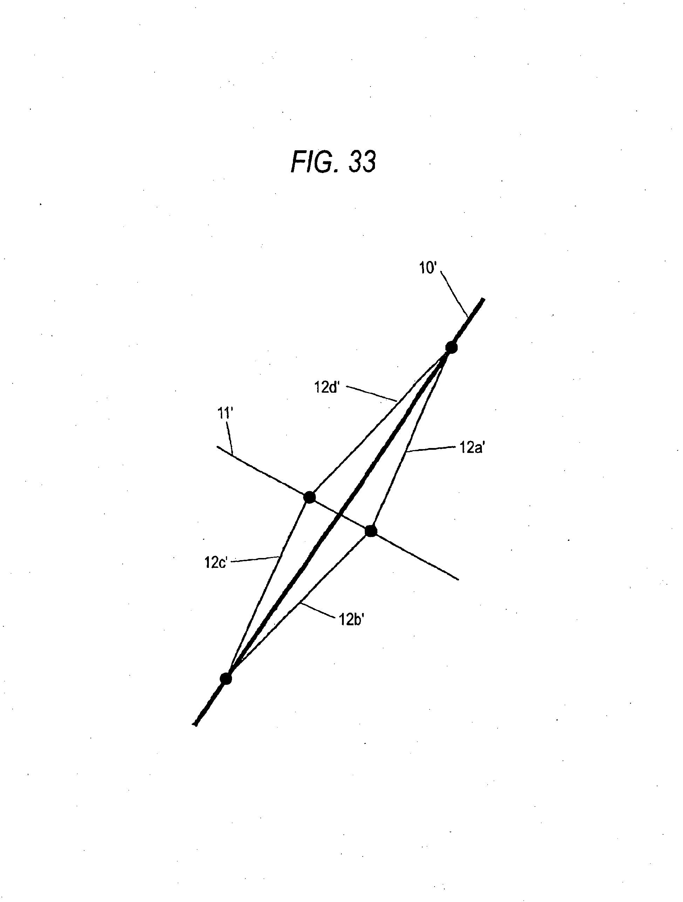

In a digital map representing roads in a single line, on the other hand, a trunk 10', a road 11' passing under the trunks 10', and transfer ramps 12a', 12b', 12c' and 12d' are individually represented by a single line, as shown in Fig. 33.

Now, it is assumed that the transmission side having the digital map represented, as shown in Fig. 32(a) or 32(b), transmits the road shape data of the up road 101 or the down road 102 to the reception side having the digital map represented as shown in Fig. 33.

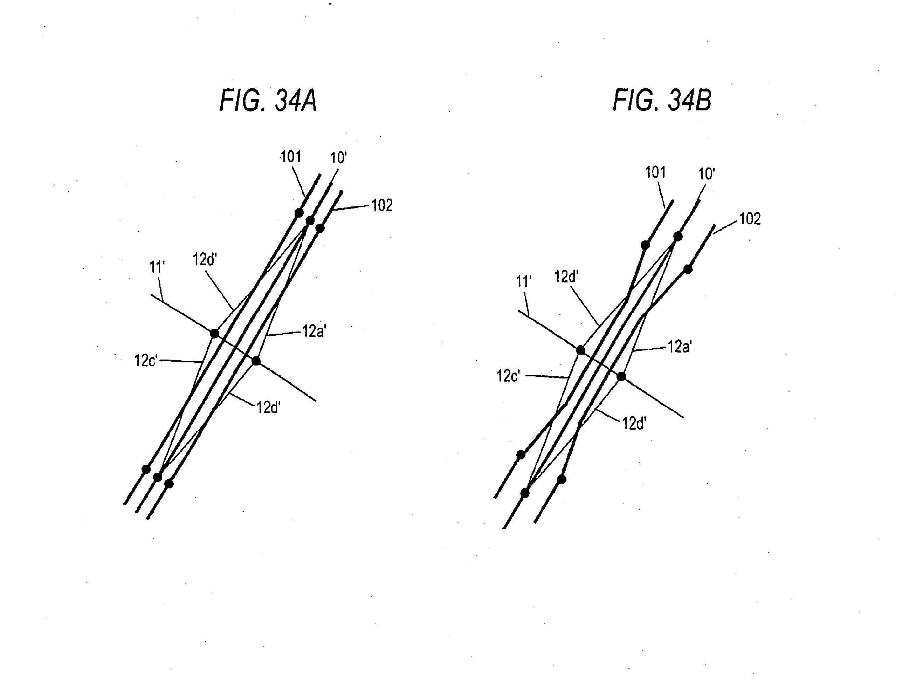

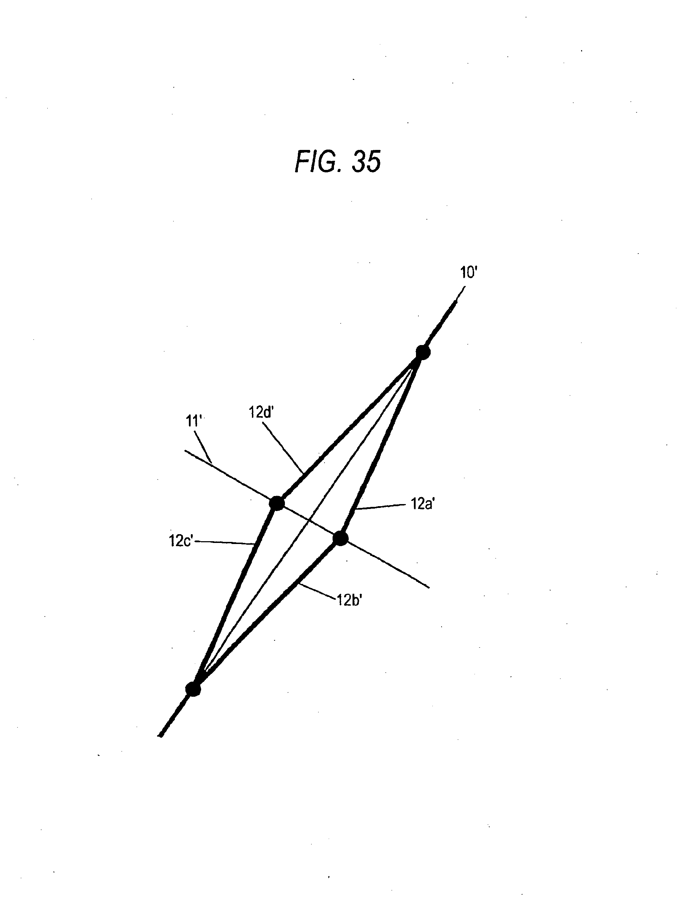

Figs. 34(a) and 34(b) schematically show the location identification to be done at this time on the reception side. Fig. 34(a) shows diagram in which the up road 101 and the down road 102 of the trunk 10 of Fig. 32(a) is superimposed on the digital map of the receiving side shown in Fig. 33. Since a road close to the trunks 10 is selected from the roads contained in the digital map of Fig. 33, no matter whether the shape data of the up road 101 or the down road 102 of the trunks 10 might be selected, the transfer ramps 12a' and 12c' or the transfer ramp 12b' and 12d' are erroneously identified, as shown in Fig. 35. As shown in Fig. 34(b), on the other hand, the up road 101 and the down road 102 of the trunks 10 of Fig. 32(b) are superposed on the digital map of the reception side shown in Fig. 33. In this case, the transfer ramps 12a', 12b', 12c' and 12d' closer to the trunks 10 than the trunks 10' are also erroneously identified.

The embodiment of the invention is described in the following.

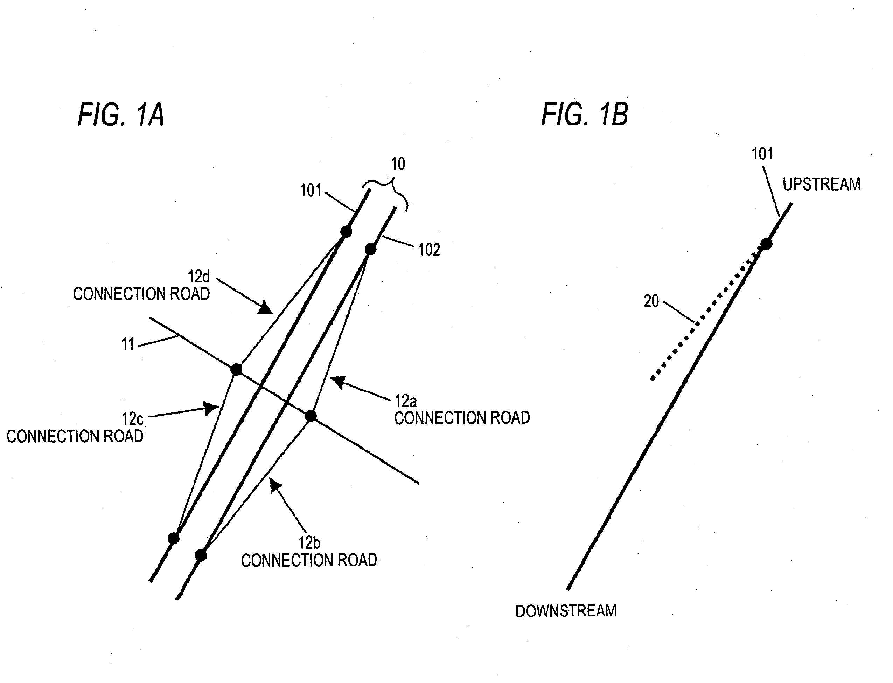

In case the transmission side has a digital map adopting the double-line representation form, when the transmission side transmits the road shape data of the up road 101 around the grade-separation intersection as shown in Fig. 1(a), for example, the transfer 12d which tends to be erroneously identified is assumed to be a branch 20, and the branch shape data representing a shape of the branch 20 is transmitted with the road shape data (object road shape data) of the up road 101. Incidentally, it is assumed that in the road shape data of the up road 101, the position data of individual nodes are arrayed sequentially from the nodes on the upstream side. In this case, sine the transfer ramp 12d branches at a small angle with respect to the data array of the up road 101, the transfer ramp 12d is assumed to be the branch 20. In the road shape data of the up road 101, a transfer ramp 12c is assumed to be the branch in case the position data of the individual nodes are arrayed sequentially from the downstream.

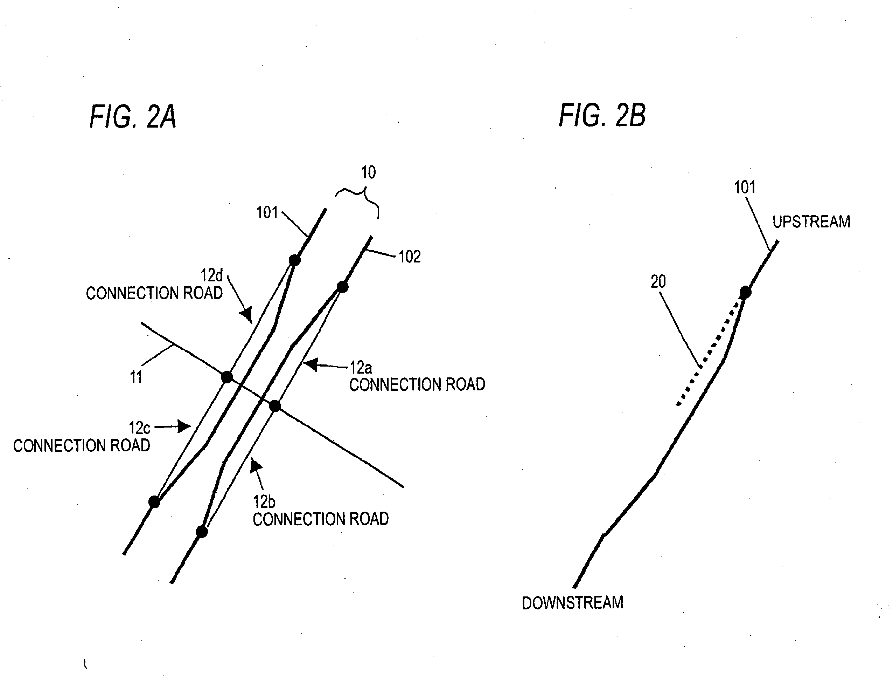

On the other hand, Fig. 2(b) shows the object road shape data and the branch shape data at the time when the transmission side having a digital map of Fig. 2(a) takes the up road 101 as its object road.

Moreover, there is information called the "position codes" which relates to a place for specifying the road or place on the map. In the present invention, the "position codes" involves a concept of at least both the object road shape data and the branch shape data.

On the other hand, the reception side having received the road shape data and the branch shape data (i.e., the position codes) specifies the object road in the following method.

(1) Selection of Object Road Candidates

In case the reception side has a digital map of Fig. 33 adopting the representation form of the single line, the object road 101 represented by the road shape data and the branch 20 represented by the branch shape data are superposed on the digital map, and the object road 101 is firstly identified and the road (i.e., the object road candidate) to become a candidate for the object road is selected. Specifically, there is executed a first location identification step of selecting the object road candidate from the object roads from the digital map with reference to the object road shape data.

(2) Selection of Branch Candidates

Next, the candidate (or the branch candidate) for the branch 20 at the time when the individual candidate roads (i.e., the object road candidates) are assumed to be the object road 101 is determined by conducting location identification on the branch 20 while excluding the candidate road (i.e., the object road candidate) of the object road 101 from the object. Specifically, there is executed a second location identification step of selecting a branch candidate of the branch from the digital map with reference to the branch shape data on the basis of the assumption that the object road candidate is the object road.

(3) Selection of Combination of Plural Object Road

Candidates and Branch Candidates

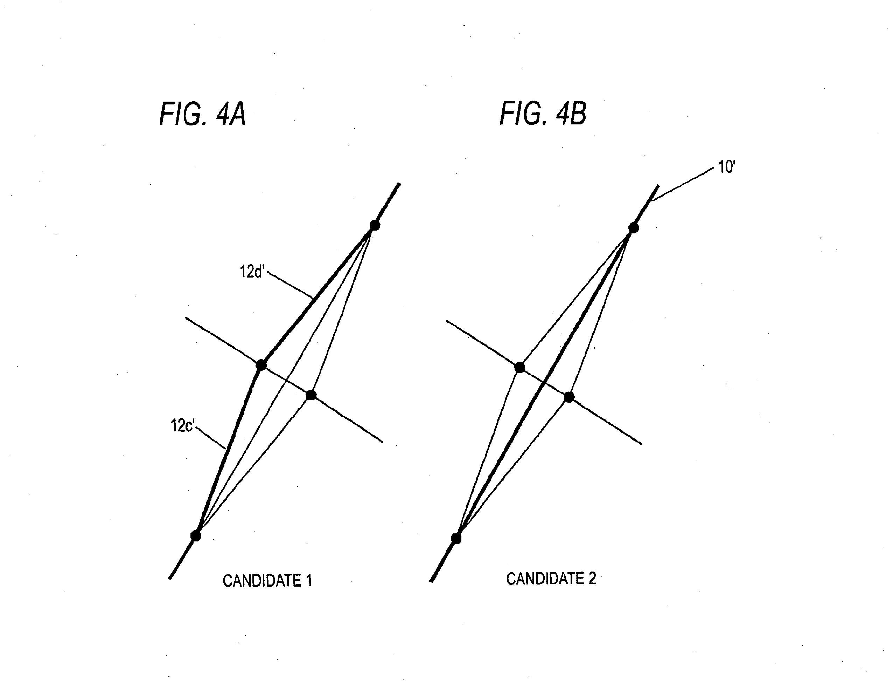

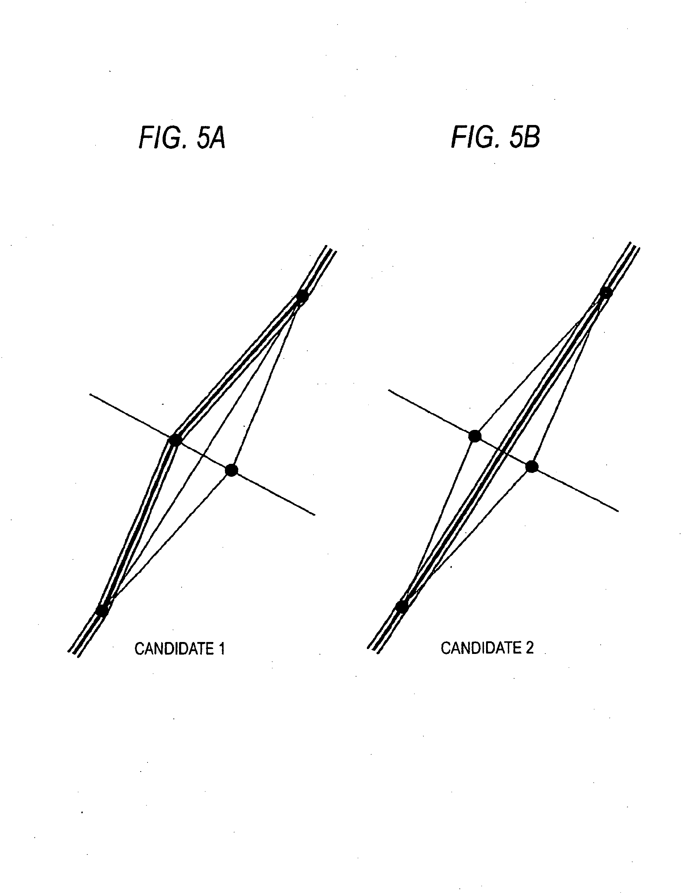

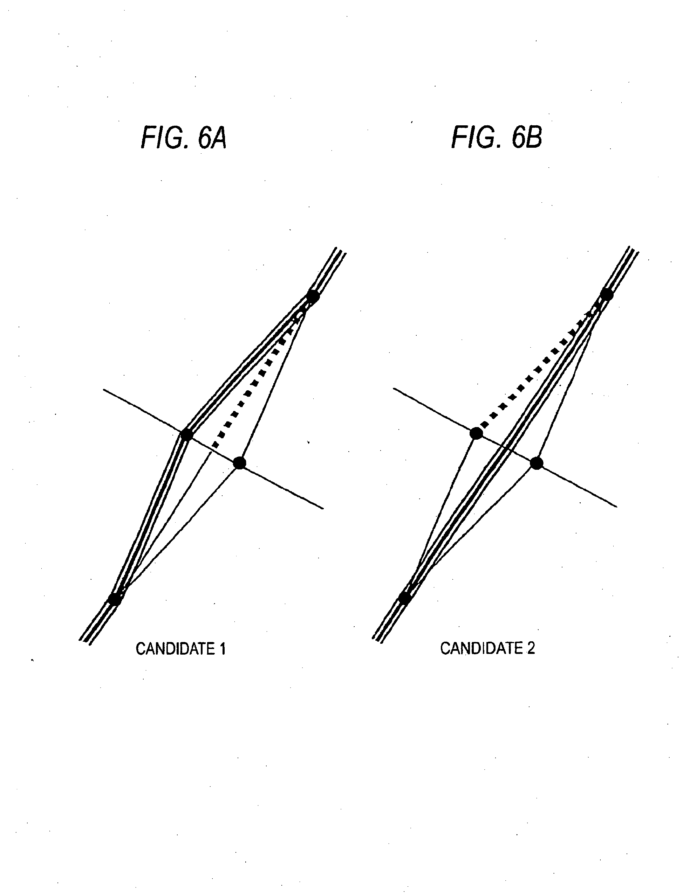

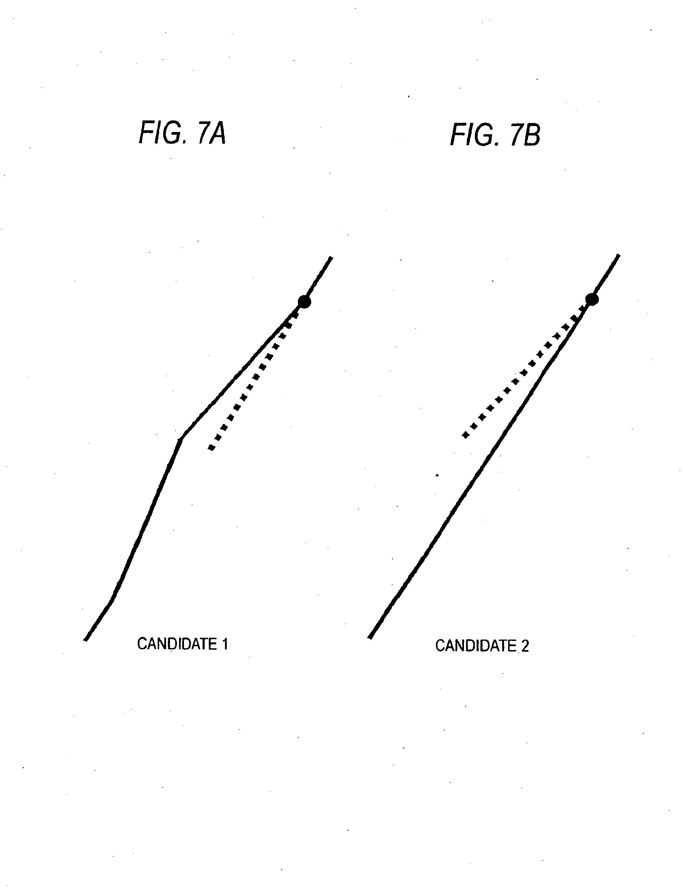

In the location identification of the object road 101, as shown in Fig. 4, the transfer ramps 12d' and 12c' the closest to the object road 101 are selected as a candidate 1 (Fig. 4(a)), and the trunk 10' the second-closest to the object road 101 is then selected as a candidate 2 (Fig. 4(b)). In short, there are selected a plurality of combinations of the object road candidates and the branch candidates. In other words, the step of selecting the plural combinations of the object road candidates and the branch road candidates is executed by repeating the first location identification step and the second location identification step. In the location identification of the branch 20, the candidate for the branch 20 is determined from roads except the road of the candidate 1 for the object road 101 at the time that that the candidate 1 is assumed to be the object road 101, as shown in Fig. 5(a), and the candidate for the branch 20 is determined from roads excepting the road of the candidate 2 for the object road 101 at the time that the candidate 2 is the object road 101, as shown in Fig. 5(b). As shown in Fig. 6, in case the transfer ramps 12d' and 12c' are to be the candidate for the object road 101, the result is that the truck 10' is the candidate for the branch 20 (Fig. 6(a)). In case the truck 10' is to be the candidate for the object road 101, the result is that the transfer ramp 12d' is the candidate for the branch 20 (Fig. 6(b)). Figs. 7(a) and 7(b) extract and show the results of the location identifications of the object road 101 and the branch 20.

(4) Comparison of Original Shape and Candidate

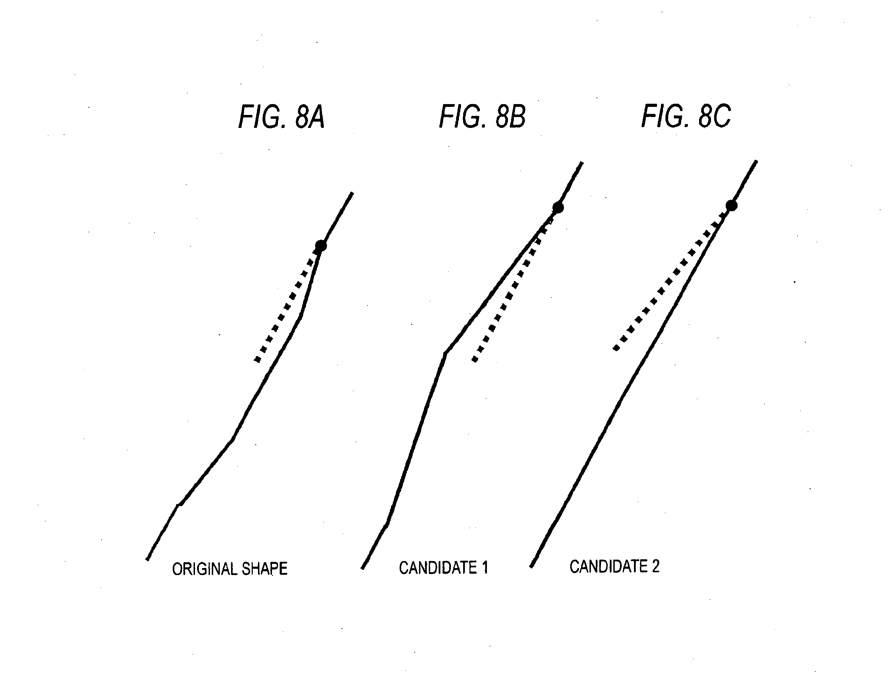

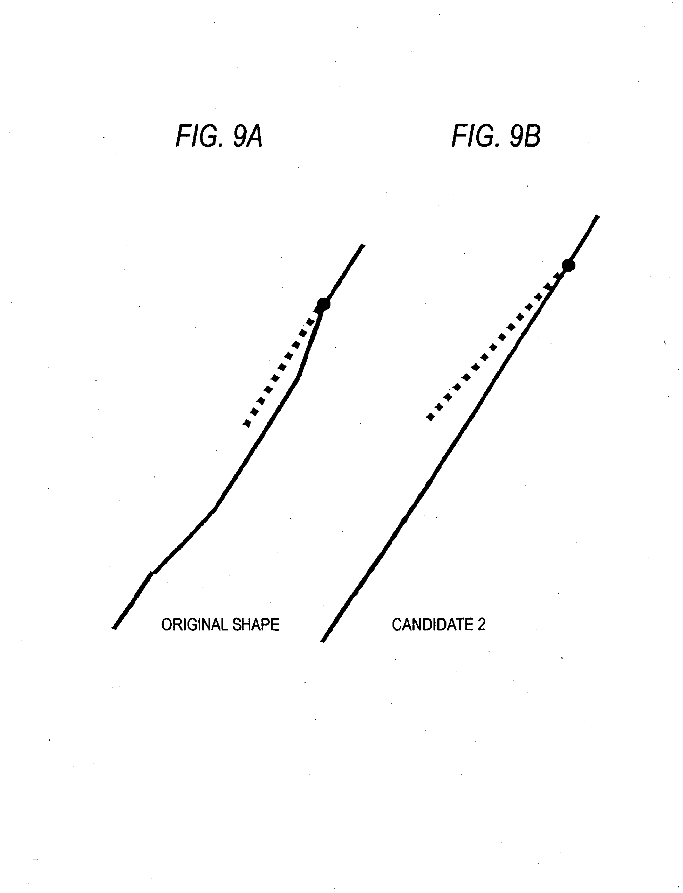

Next, the location identification results (b) and (c) and the shape (a) of the original object road 101 and the branch 20 are compared, as shown in Fig. 8, and the candidate 2 having high similarity therewith is selected as the object road, as shown in Fig. 9. The detail of this similarly evaluation method will be described hereinafter. In short, there is executed the step of finally selecting the object road candidate for the object road, from the plural combinations determined in the above. More specifically, there are executed the step of deciding the similarity between the shape of the object road candidate and the branch candidate and the original shape of the object road and the branch, and the step of finally selecting the object road candidate as the object road on the basis of that decision result. Thus, the transmission side transmits the road shape data of the object road and the branch shape data of a branch which tends to be erroneously identified, so that the object road can be precisely identified on the digital map of the reception side even in case the reception side has the digital map adopting the single-line representation form different from that of the transmission side.

Here, the error in the location identification tends to occur in such a portion, e.g., not only a grade-separation transfer ramp but also a connection road connecting parallel roads at a small intersection angle and a section which branches or intersect at a small angle (e.g., about 10 degrees or less) and runs a distance in parallel, such as the entrance or exit of an interchange (although this exists among the trucks sometime). The positional information location identification method of this embodiment is remarkably effective for prevent a specific error at the position such as the above.

Even if a branch has a large branching angle from a trunk just after having branched but if the branch then curves forms a small angle with the trunk, error in the location identification of the branch tends to occur (because the object road is specified by conducting the location identification on the nodes or sampling points which is set apart from each other). Therefore, when using the term the "angle" of the branch, this indicates the angle between a portion of the branch within a predetermined length from the branching point and occupying the length of a considerable portion thereof, and the trunk.

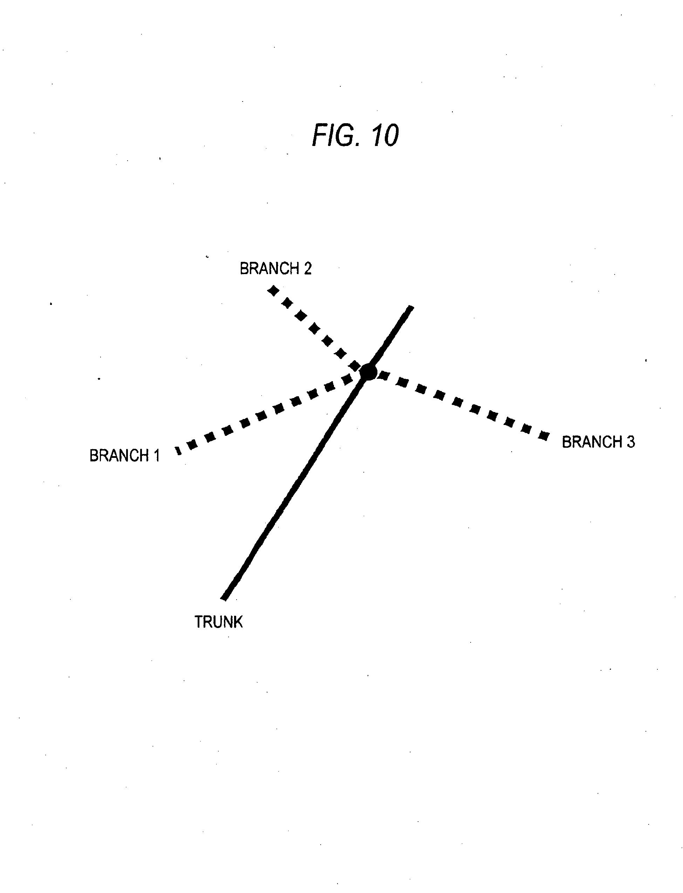

Moreover, the number of branches from the branching point should not be limited to one but may be plural, as shown in Fig. 10.

Moreover, the branch shape data need not includes the whole shape of the branch until another road but may contain only the data representing the shape to the midway of the branch.

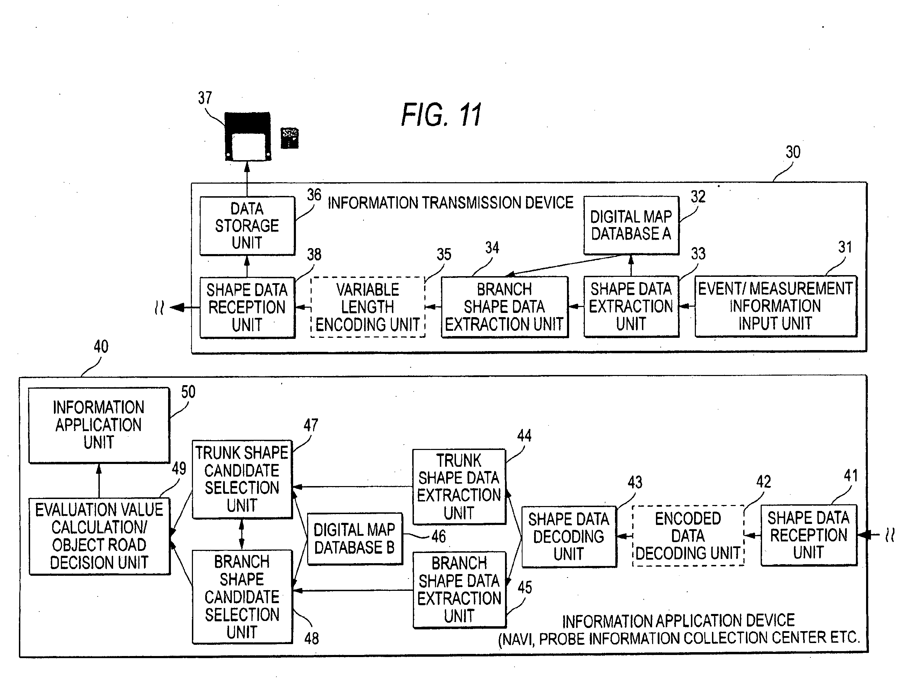

Fig. 11 shows a configuration of a system for executing the positional information transmission method.

This system includes an information transmission device 30 as an information providing device for transmitting the road shape data and the branch shape data of an object road, and an information application device for receiving the information to reproduce the object road. The information transmitting device 30 is a center providing traffic information including information of the object road section and recommended route information to the destination, and the information application device 40 is a car navigation system which uses and put the information in practice. Alternatively, the information transmission device 30 is a probe car mounted device for providing traveled path information together with measured information such as a speed, and the information application device 40 is a probe information collection center for collecting the information from each probe car to use it for generating the traffic information.

The information transmission device 30 constitutes so-called "transmission side", and the information application device 40 constitutes so-called "reception side". However, the detailed structure of these are not limited to the embodiment. It is sufficient that the "transmission side" can send/transmit the shape data, and that the "reception side" can receive/accept the shape data. The information transmission device 30 is provided with: a digital database A 32; an event information input unit 31, to which delay information or traffic accident information is inputted; a shape data extraction unit 33 for extracting road shape data of an object road section from a (first) digital map database A 32; a branch shape data extraction unit 34 for selecting the branch in the object road section and extracting the branch shape data from the digital map database A 32; a variable length encoding unit 35 for compressing and encoding the road shape data and the branch shape data according to need; a data storage unit 36 for storing the road shape data and the branch shape data and providing the stored data to an external media 37; and a shape data transmission unit 38 for transmitting the road shape data and the branch shape data.

On the other hand, the information application device 40 is provided with: a (second) digital map database B 46; a shape data reception unit 41 for receiving the road shape data and the provided branch shape data; an encoded data decoding unit 42 for decoding the data, if compressed and encoded; a shape data decoding unit 43 for decoding the position data of the nodes or sampling points contained in the road shape data and the branch shape data; a trunk shape data extraction unit 44 for extracting the position data of the nodes or the sampling points of the object road from the decoded data; a branch shape data extraction unit 45 for extracting the position data of the nodes and sampling points of the branch from the decoded data; a trunk candidate selection unit 47 for selecting the candidate of the object road from the map data of the digital map database B 46 by location identifications with the data extracted by the trunk shape data extraction unit 44; a branch shape candidate extraction unit 48 for selecting the candidate of the branch from the map data of the digital map database B 46 by location identifications with the data extracted by the branch shape data extraction unit 45; an evaluation value calculation/object road decision unit 49 for determining the object road on the basis of the evaluation value indicating a similarity to the original shape; and an information application unit 50 for utilizing information on the object road.

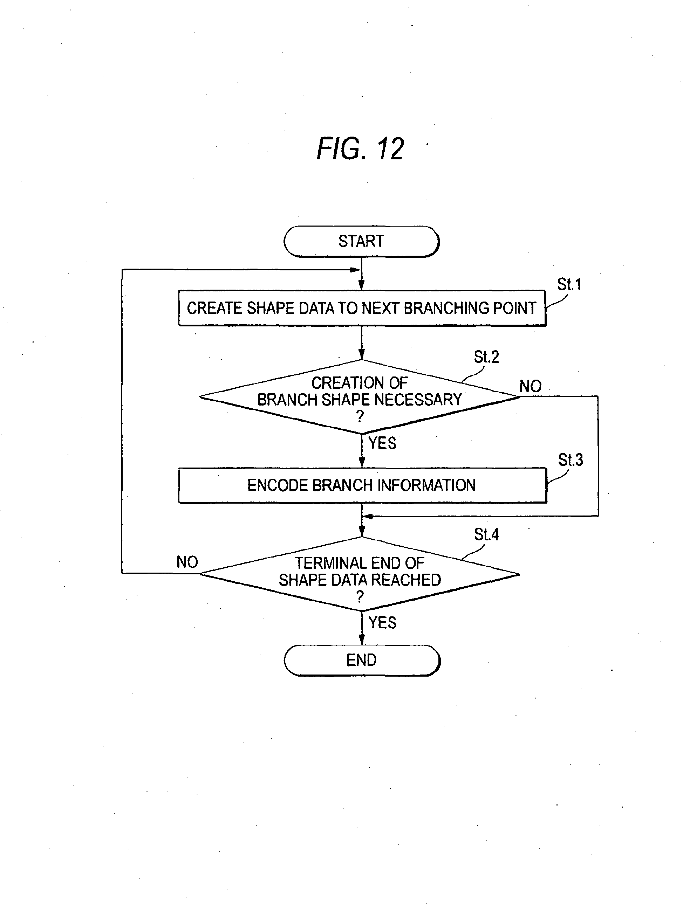

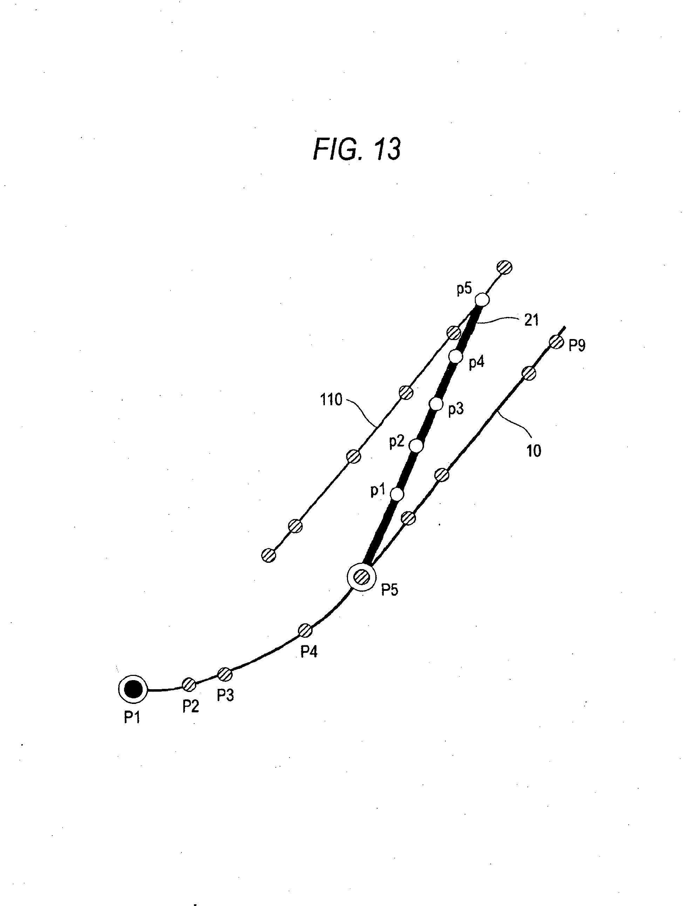

The flow diagram of Fig. 12 shows the operation procedures of the shape data extraction unit 33 and the branch shape data extraction unit 34 of the information transmission device 30. It is now assumed, as shown in Fig. 13, that nodes P1 to P9 of the road 10 belong to the object road, and that a connection road 21 to a parallel road 110 branches from the node P5 of the object road 10.

The shape data extraction unit 33 creates the road shape data (at Step 1) by extracting the position data of the nodes of the object road 10 from P1 to P5, where the connection road 21 branches, from the digital map database A 32. The branch shape data extraction unit 34 decides (at Step 2) whether or not it is necessary to set the connection road 21 branching from the branching point P5, as a branch. In this decision, it is checked whether or not the shape of the connection road 21 extending from the branching point P5 matches the following condition (1) or (2). In case this answer is Yes, the connection road 21 is determined as the branch.

(1) The relative branching angle with respect to object road is within $\pm\ \theta$.
(2) The shape of the branch from the branching point by a predetermined distance L is similar to the object road.

The aforementioned case corresponds to such a case that the object road and the branch (or the connection road) run in parallel from the connection position to a predetermined position and are similar in shape.

In case the branch shape data are created on the basis of the positional relation between the object road and the branch, as in the aforementioned cases (1) and (2), the branch shape data can be structured to contain the reference data to be referred to the object road shape data.

The branch shape data extraction unit 34 creates the branch shape data (at Step 3) by extracting the position data of the nodes p1, p2, p3, p4 and p5 set on the connection road 21 from the digital map database A 32, in case it is necessary to set the branching connection road 21 as the branch. The branch shape data are not creased if it is not necessary to set the connection road 21 as the branch.

If the branching point P5 is not the terminal of the object road (at Step 4), the routine returns to Step 1 and the shape data extraction unit 33 creates the road shape data to the next branching point, and the operations of Step 1 to Step 3 are repeated till the terminal P9 of the object road is reached.

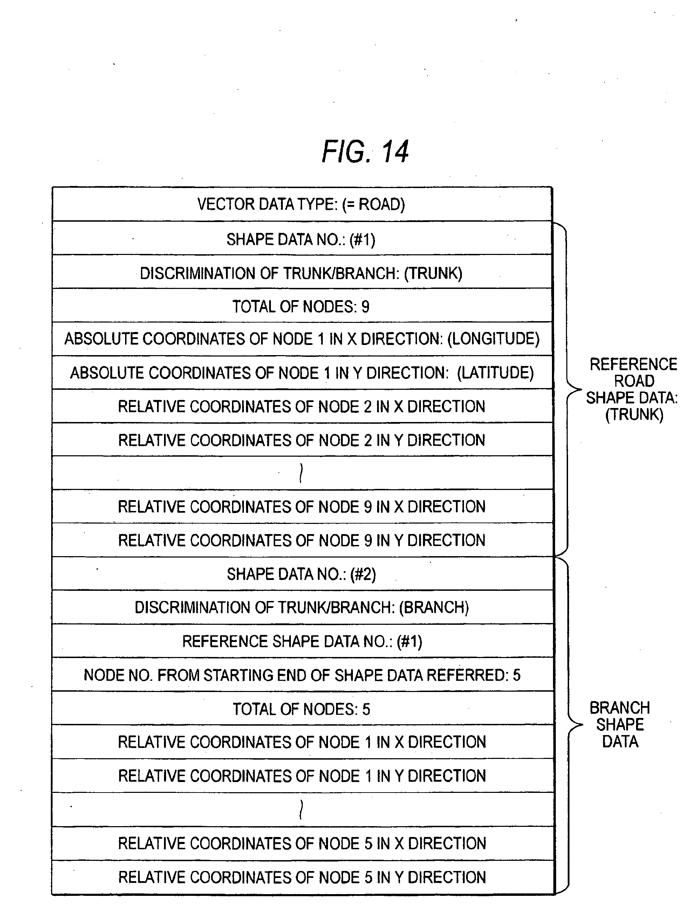

By these operations, the road shape data (i.e., the road shape data referred) of the object road and the branch shape data relating to the object road shape data are created (by an encoding operation), as shown in Fig. 14. In Fig. 14, the "Shape Data No. to Re referred" or the "Node No. from Starting Point of Reference Shape Data" correspond to the so-called "reference data" or the "connection positional information". Therefore, the "connection positional information" can be expressed by the "Node No. from Starting Point of Shape Data", that is, by the point number composing the object road shape data. Moreover, the attribute information for discriminating the object road shape data and the branch shape data (i.e., the assistance shape data), that is, the "Discrimination of Trunk/Branch (Trunk or Branch)" is contained in both the object road shape data and the branch shape data. This attribute information may be contained-in only one of the object road shape data and the branch shape data. The shape data transmission unit 38 of the information transmission device 30 transmits those shape data.

Here, the position data of the nodes are expressed in absolute coordinates and in relative coordinates but can also be expressed with components of distance and angle or with by coding.

Moreover, the section which tends to be mismatched are the transfer ramp, the connection road and the entrance/exit of the interchange, where the roads branch at a small angle and run a distance, as described hereinbefore, and are known in advance. Therefore, the sections needing the transmission of the branch shape, the branch shape to be transmitted and the corresponding trunk shape may be defined in advance, and the defined branch may be inserted without fail in case the positional information of this route is to be transmitted.

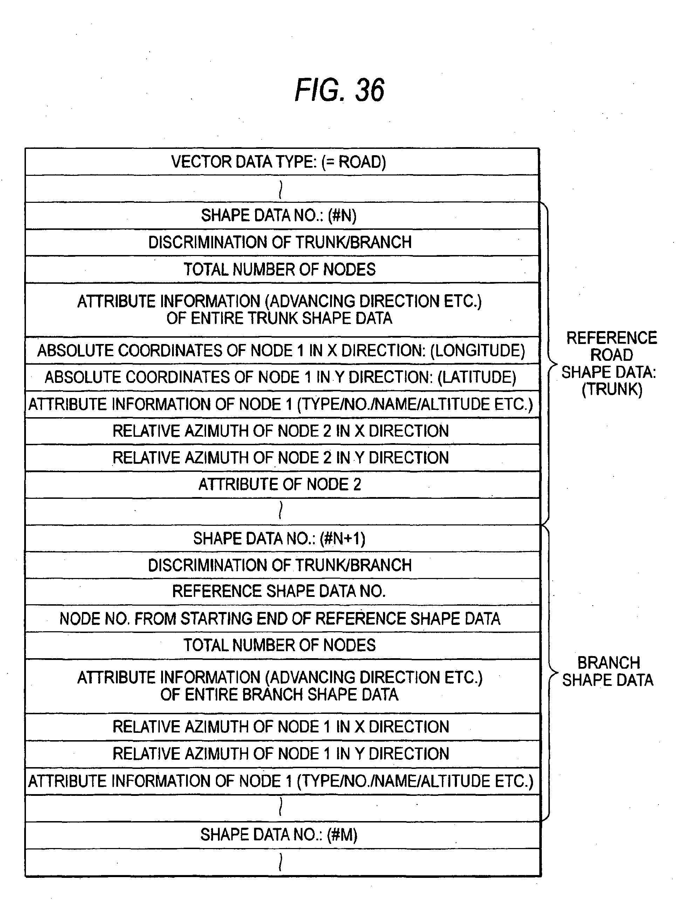

As shown in Fig. 36, the road attribute information of the branch shape data (i.e., the assistance shape data) may be added to the position codes.

At least one of the road type, the link type, the road number, the road name, the passing direction, the altitude, and the opening year of the road may be used as the road attribute information of the assistance shape data.

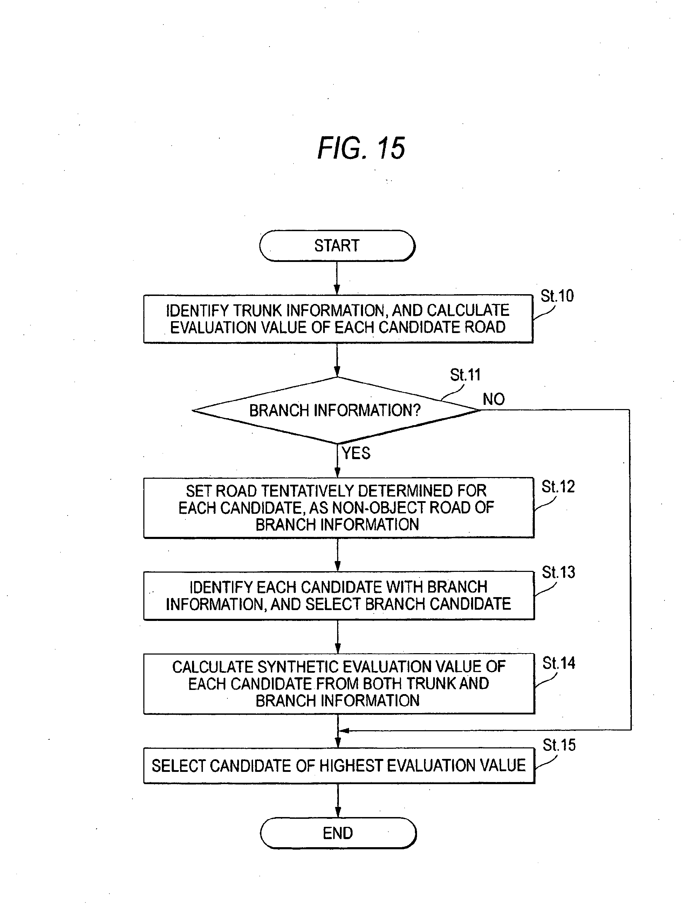

On the other hand, Fig. 15 is a flow chart showing the operation procedure of the information application device 40 (i.e., the decoding method for the positional information). The trunk shape data extraction unit 44 of the information application device 40 extracts the road shape data of the object road from the decoded shape data (Fig. 14), and the trunk candidate selection unit 47 selects the road candidate for the object road by map matching the road shape data with the map data of the digital map database B46, thereby to calculate the evaluation value of each candidate road (at Step 10). In case the branch shape data are included in the shape data decoded (that is, in case the answer of Step 11 is Yes), the branch shape data extraction unit 45 extracts those branch shape data. In order to determine the branch candidate (i.e., the assistance candidate) at the time that each candidate selected by the trunk candidate selection unit 47 is assumed to be the object road, the branch shape candidate selection unit 48 sets the candidate road as a non-object road of the branch candidate (or the assistance candidate) (at Step 12) and selects the branch candidate (or the assistance candidate) for each candidate (at Step 13) by the map matching using the branch shape data.

The evaluation value calculation/object road decision unit 49 calculates the synthetic evaluation value of each candidate from both the object road candidate and the branch candidate (i.e., the assistance candidate) (at Step 14), and selects the object road candidate of the highest evaluation value (at Step 15). In case the branch shape data are not included in the shape data (that is, in case the answer of Step 11 is No), the routine transfers to Step 14, at which the object road candidate of the highest evaluation value determined at Step 10 is selected.

To calculate the synthetic evaluation value of the object road candidate, the evaluation value calculation/object road decision unit 49 reproduces the original shapes of the object road and the branch with the road shape data and the branch shape data, and calculates the evaluation value indicating the similarity of the object road candidate and the branch candidate (or the assistance candidate) to the original shape, for example, in the following manner.

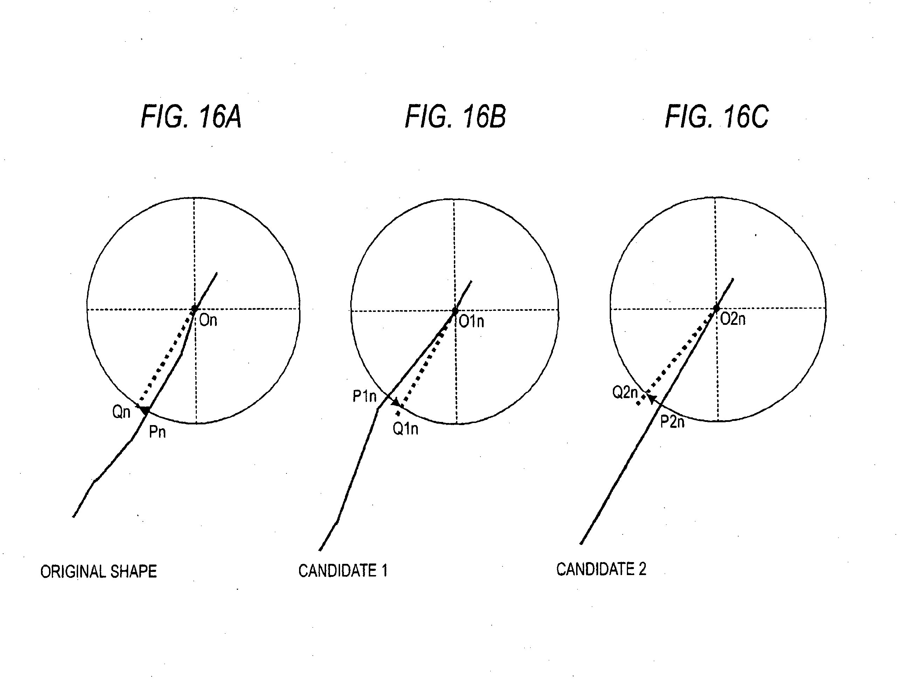

With reference to Fig. 16, the method for calculating the evaluation value indicating the similarity to the original shape (Fig. 8(a)), by way of an example of the road candidate (i.e., the object road candidate) of the object road and the branch candidate road (i.e., the branch candidate; the assistance candidate), as obtained in Fig. 8(c) and 8(c).

(1) The point of intersection between a circle having a radius n around the branching point of a branch or a branch candidate (i.e., an assistance candidate) and an object road of an original shape is designated by Pn (Xn, Yn), and the point of intersection between that circle and an object road candidate k is designated by Pkn (Xkn, Ykn).

The intersection point between the circle of the radius n and the branch of the original shape is designated by Qn (Vn, Wn), and the intersection point between that circle and a branch candidate corresponding to the object road candidate k is designated by Qkn (Vkn, Wkn).

(2) A vector $\Delta$ n between Pn-Qn and a vector $\Delta$ kn between Pkn-Qkn are calculated by the following equations:

$$\Delta n = (\Delta Xn, \ \Delta Yn) = (Xn\text{-}Vn, \ Yn\text{-}Wn);$$

and

$$\Delta kn = (\Delta Xkn, \ \Delta Ykn) = (Xkn\text{-}Vkn, \ Ykn\text{-}Wkn).$$

That is, there are executed: the step of calculating a first vector between points on the object road and on the branch, the points being spaced at an equidistance from the intersection point between the object road and the branch in the original shape; and the step of calculating a second vector between points on the object road candidate and the branch candidate, the points being spaced at an equidistance from the intersection point between the object road candidate (i.e., the assistance candidate) and the branch candidate (i.e., the assistance candidate).

(3) The magnitude $\delta$ kn of the difference between the vectors $\Delta$ n and $\Delta$ kn is calculated by the following equation:

$$\delta kn = |\Delta n - \Delta kn|$$
$$= \sqrt{((\Delta Xn - \Delta Xkn)^2 + (\Delta Yn - \Delta Ykn))^2}.$$

In short, the difference between the first vector and the second vector is calculated.

(4) As the value $\delta kn$ is the smaller, the similarity to the original shape is the higher. The value $\delta kn$ is calculated using several circles having different values of the radius n, and the value of $\Sigma \delta kn$ is calculated as the evaluation value representing the similarity to the original shape (Fig. 8(a)). As this evaluation value is the smaller, the similarity to the original shape is the higher. Specifically, there are executed: the step of acquiring a plurality of first vectors by repeating the aforementioned first vector calculating step at every distances from the intersection point; the step of acquiring a plurality of second vectors by repeating the aforementioned second vector calculating step at every distances from the intersection point and in every combinations; and the step of calculating the differences between the plural first vectors and the plural second vectors in every combinations to select the object road candidate in the combination of the smallest difference finally as the object road.

The evaluation value calculation/object road decision unit 49 calculates the synthetic evaluation value of the object road candidate on the basis of the evaluation value representing the similarity to the original shape thus obtained and the evaluation value of the object road candidate determined at Step 10.

By selecting the candidate of the object road with those evaluations, even if road which branches at a small angle from the object road exists, the road can be prevented from being erroneously identified.

(Second Embodiment)

The second embodiment of the invention is explained in connection with another method for determining the evaluation value representing the similarity of the object road candidate and the branch candidate (i.e., the assistance candidate, as omitted in the following) to the original shape.

In this method:

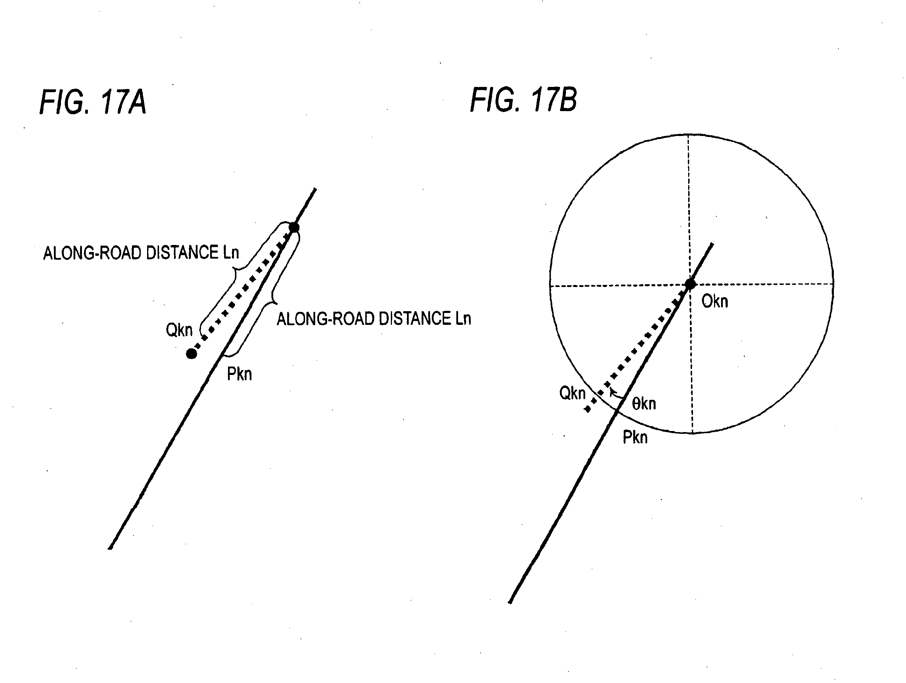

(1) As shown in Fig. 17(a), the coordinates of the point, which has proceeded by Ln from a branching point On of a branch along the object road of the original shape, are designated by Pn (Xn, Yn), and the coordinates of the point, which has proceeded by Ln along the branch of the original shape, are designates by Qn (Vn, Wn). Further, the coordinates of the point, which has proceeded by Ln along the object road candidate k, are designated by Pkn (Xkn, Ykn), and the coordinates of the point, which has proceeded by Ln along the branch candidate, are designated by Qkn (Vkn, Wkn);

(2) The angle $\theta n$ (with plus and minus signs) of Pn $\to 3$ On $\to$ Qn and the angle $\theta kn$ of Pkn $\to$ Okn $\to$ Qkn are calculated, as shown in Fig. 17(b). In short, the step of calculating the first angle, which is made between the original shape of the object road and the original shape of the branch, is executed;

(3) The magnitude 6 kn of the difference between the angle $\theta n$ and the angle $\theta kn$ is calculated by the following equation:

$$\delta kn = |\theta n - \theta kn|.$$

The step of calculating the second angle between the object road candidate and the branch candidate in every combinations of the object road candidate and the branch candidate is executed; and

(4) As the value $\delta kn$ is the smaller, the similarity to the original shape is the higher. Several values $\delta kn$ are calculated for different values Ln, and the value of $\Sigma \delta kn$ is calculated as the evaluation value representing the similarity to the original shape. As the evaluation value is the smaller, the similarity to the original shape is the higher. Specifically, the step of calculating the different between the first angle and the second angle in every combinations to select the object road candidate of the combination for the smallest difference finally as the object road is executed.

The evaluation value representing the similarity to the original shape can be obtained by that method.

(Third Embodiment)

The third embodiment of the invention is described in connection with another method for calculating the synthetic evaluation value of the object road candidate.

In this method:

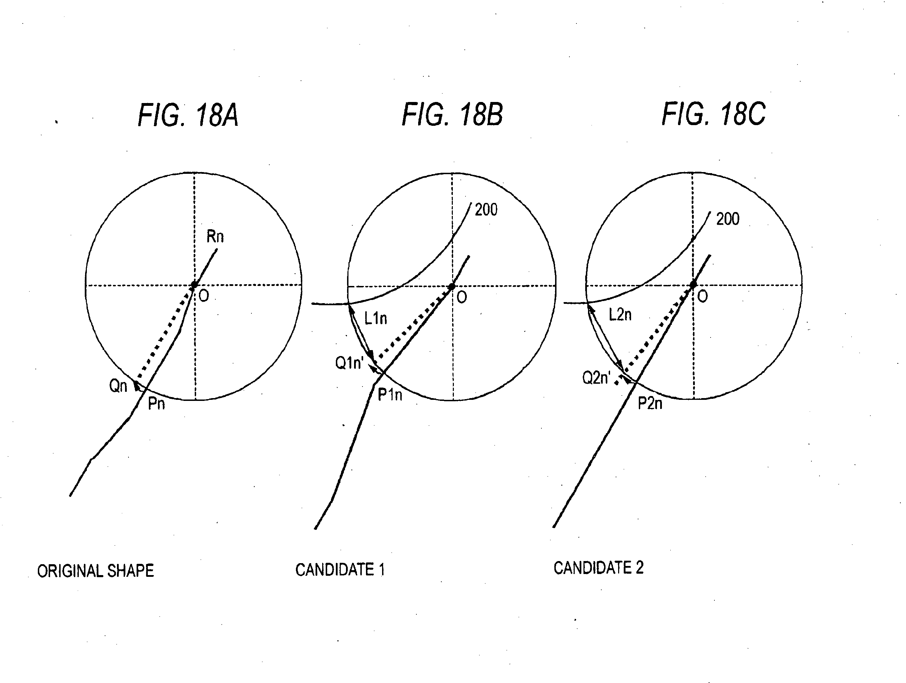

(1) As shown in Fig. 18(a), the intersection point Pn between a circle of a radius Rn having a branching point of a branch of an original shape at a center O, and the object road, and the intersection point Qn between the circle and the branch are calculated;

(2) The vector of Pn → Qn is calculated. This vector can be expressed either by the relative coordinates $\Delta Xn$ and $\Delta Yn$, as shown in the first embodiment, or by the angle $\theta n$ between Pn → O → Qn and the Rn;

(3) As shown in Figs. 18(b) and 18(c), the Qkn' is set from the intersection point Pkn between the circle of the radius Rn having the branching point of the branch candidate at the center O and the object road candidate k by using the vector Pn → Qn;

(4) It is decided whether or not a road exists near the Qkn' based on the road net excepting the object road candidate k, and the distance Lkn to the closest road 200 is calculated; and

(5) The value $\Sigma Lkn$ is calculated as the evaluation value of the branch by executing the foregoing operations (1) to (4) for different Rn. The synthetic evaluation value of the object road candidates is calculated by adding the evaluation value of the branch and the evaluation value of the object road candidate (i.e., the evaluation value calculated at Step 10 of the flow chart of Fig. 15).

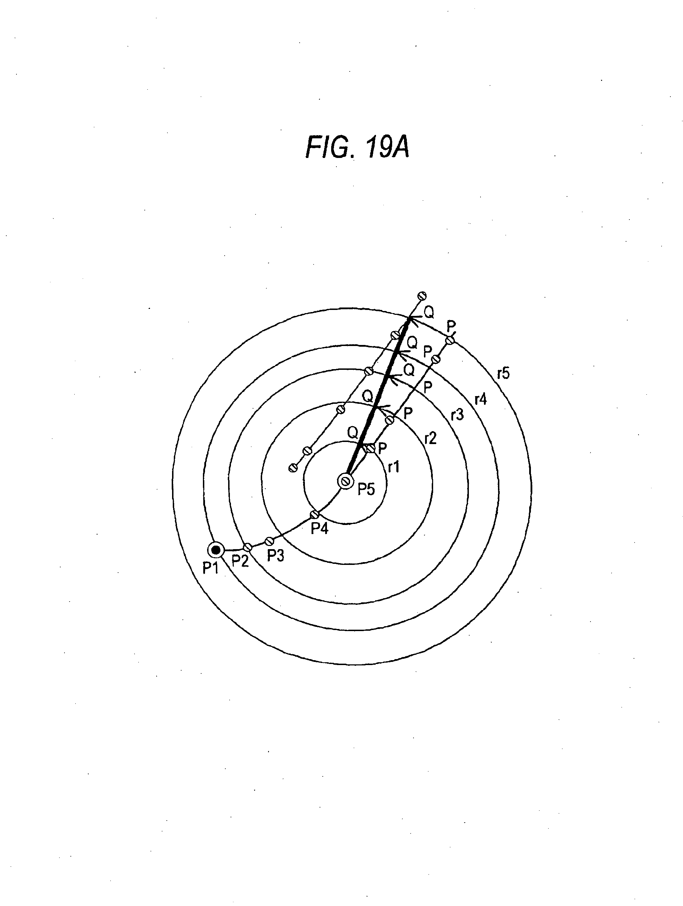

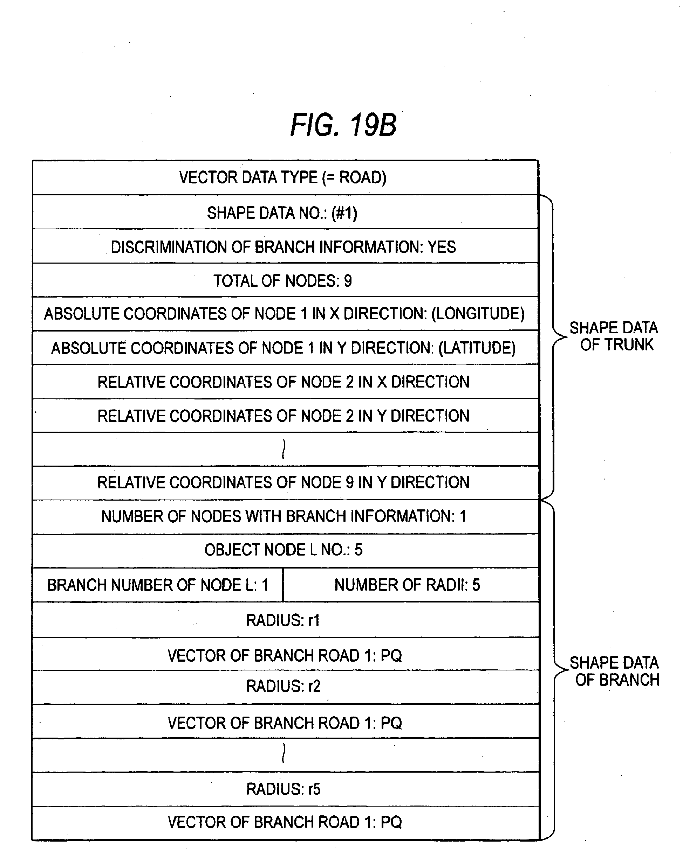

Fig. 19(b) shows the shape data to be sent from the transmission side to the reception side in the case of adopting the above method. In the shape data, as shown in Fig. 19(a), the vector of Pn → Qn corresponding to the plural radii Rn in the original shape is included as the branch shape data, so that the location identification on the reception side can be made efficient.

(Fourth Embodiment)

The fourth embodiment of the invention is described as to another method for calculating the synthetic evaluation value of the object road candidate.

In this method:

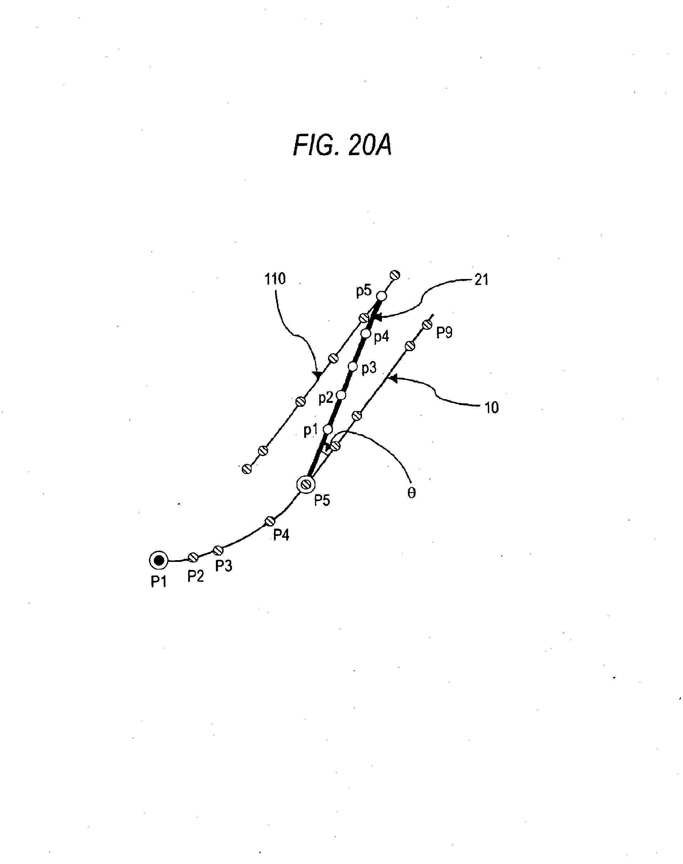

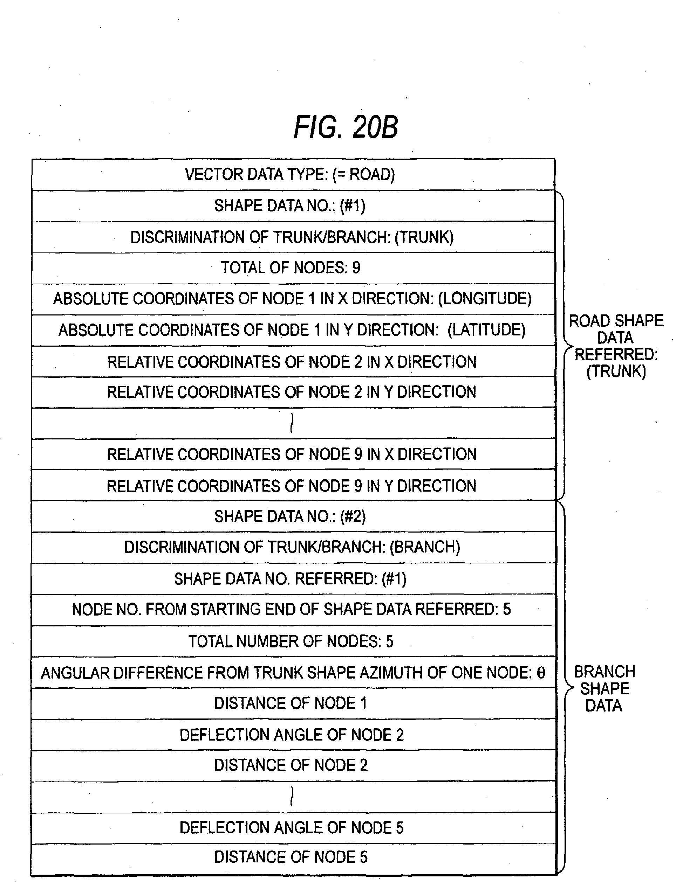

(1) On the transmission side, as shown in Figs. 20(a) and 20(b), the node P1 of the branch 21 is represented by an angular difference $\theta$ from the object road 10, and the distance from the branching point P5 (i.e., the starting end of the branch 21), and the subsequent nodes p2, p3, p4 and p5 are represented by the deflection angle from the adjoining node and by the distance;

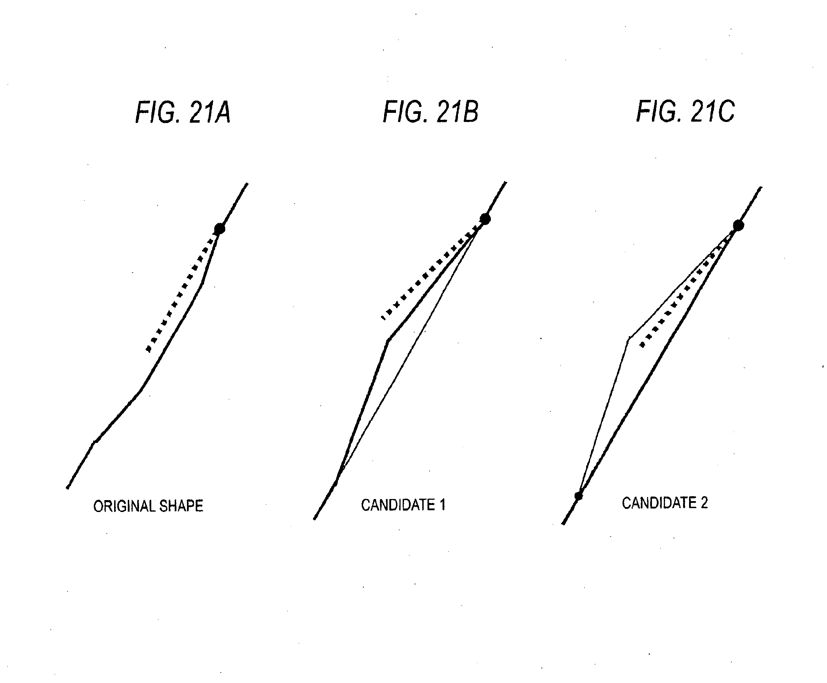

(2) The reception side having received the shape data (of Fig. 20(b)) performs location identifications using the road shape data, and selects the road for the candidate of the object road thereby to calculate the evaluation value of each candidate road. The branch shape, which is located at a position relative to each object road candidate is reproduced from the branch shape data included in the shape data. Fig. 21 (a) shows the object road and the branch of the original shape; Fig. 21(b) shows the branch shape (in a dotted line) which is reproduced at a position relative to the object road candidate 1 (in a thick line); and Fig. 21(c) shows the branch shape (in a dotted line) which is reproduced at a position relative to the object road candidate 2 (in a thick line);

(3) The road of the object road candidate is set to a non-object road of the branch candidate and the location identification is conducted for the branch, and the branch candidate is selected to calculate its evaluation value. In Figs. 21(b) and 21(c), roads indicated by thin lines are selected as individual branch candidates. Therefore, the evaluation result of the branch candidate of Fig. 21 (c) is better than that of the branch candidate of Fig. 21 (b); and

(4) The object road candidate of the better evaluation result is selected by adding the evaluation value of the branch candidate to the evaluation value of the object road candidate. As a result, the object road candidate 2 (Fig. 21 (c)) is selected.

In case this method is adopted, since the branch shape data included in the shape data (Fig. 20(b)) are represented by the angle and the distance, the amount of data is reduced.

(Fifth Embodiment)

The fifth embodiment of the invention is described as to a method for compressing the amount of shape data to be transmitted.

In the compression of the amount of the shape data, as described in Patent Publication 3, an equidistance resampling is done for the object road and the branch, and the position data of the individual sampling points other than the starting end are represented by either a deflection angle $\theta$ j from the adjoining sampling point or a differential value $\Delta \theta$ j of statistical predicted value and are encoded to a variable length.

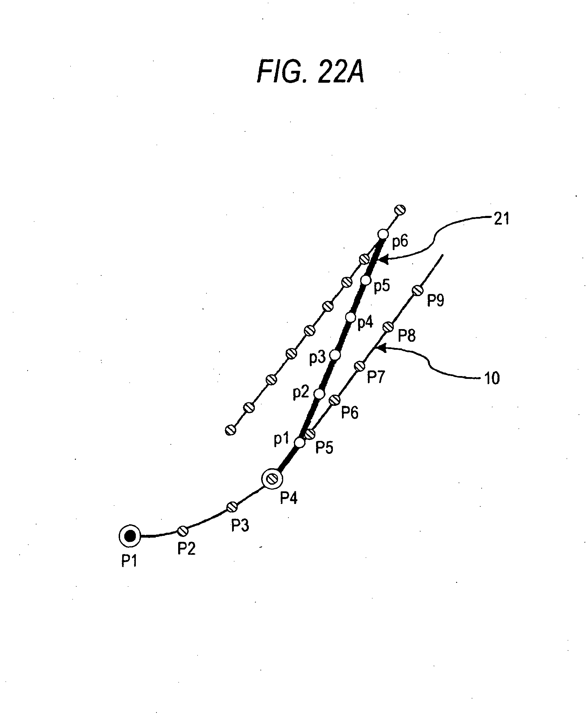

In Fig. 22(a), there are shown the sampling points P1, P2, - - -, and P9 set at the object road 10 by the equidistance resampling, and the sampling points p1, p2, - - -, and p6 set at the branch 21 by the equidistance resampling. The point p1 is the point where the branch 21 branches from the object road 10, and does not always coincide with the sampling point of the object road 10. In order to correlate the branch 21 to the sampling point of the object road 10, therefore, the sampling point P4 on the object road 10 upstream of the point p1 closest to the point p1 is defined as the starting end (i.e., the starting reference point) of the branch 21.

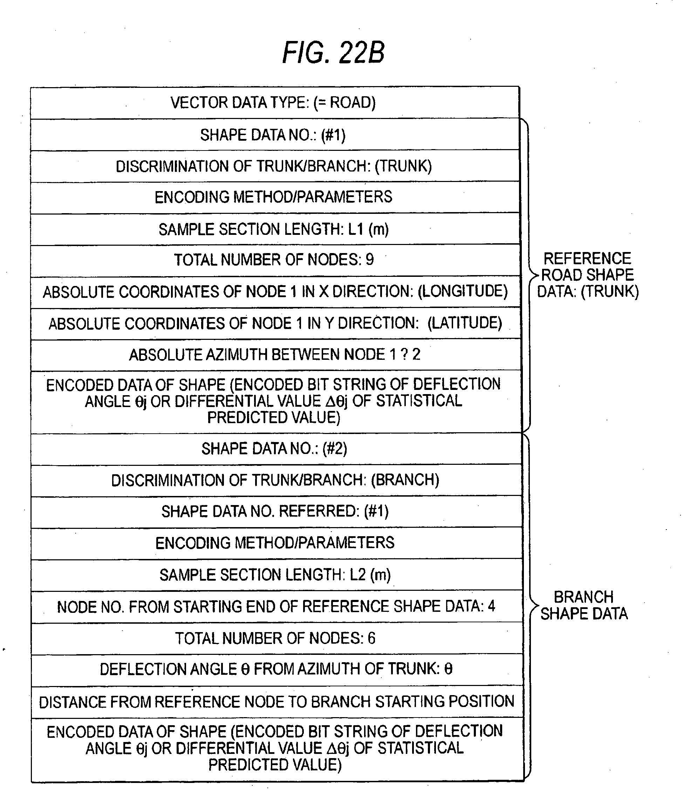

Fig. 22(b) tabulates the shape data including the compressed/encoded road shape data of the object road 10 and the compressed/encoded branch shape data of the branch 21, the starting end of which is redefined. In these branch shape data, the number, as counted from the point P1, of the point P4 defined as the starting end of the branch 21 is described as the "Node No. from Starting End of Reference Shape Data", and the distance from the Point p4 to the point p1 is described as the "Distance from Reference Node to Branch Starting Position".

Thus, by compressing the amount of the shape data, the load at time of the data transfer is reduced.

Accordingly, in the digital map positional information transmission method of the invention, the transmission side transmits the shape of the object road by adding to it the road to intersect or branch as the branch shape, and the reception side specifies the object road with reference to the branch shape. Thus, the matching error on the reception side can be prevented.

The error in the location identification, as might otherwise occur in case the road representation forms (i.e., the single-/double-lines) of the digital map held on the transmission side and the reception side are different, cannot be prevented merely by adding the information such as the link number or the link angle of the connection links to the road shape data of the object road. However, the positional information transmission method of the invention for adding the branch shape as the reference information can avoid the error in the location identification, even in case the road representation forms of the digital map on the transmission side and the reception side are different.

On the reception side, the object road 10 and the parallel road 110 of Fig. 13, for example, can be discriminated by referring to the branch shape, thereby to avoid the error of the location identification to the parallel road.

(Sixth Embodiment)

The sixth embodiment of the invention is described as to a method for specifying the branching position of a branch.

In case the transmission side transmits the road shape data of the object road and the branch shape data of the branch, the reception side can eliminate the deviation in the length direction of the object road in the location identification with reference to the branching position of the branch. Therefore, the branching position of the branch is employed as the reference point of the traffic information expression, and the delay position, the accident position and so on are expressed by the distance from the reference point, so that the traffic information can be precisely transmitted.

In case, however, digital maps of different scales are used in the transmission side and the reception side, it is not easy for the reception side to specify the branching position of the branch from the shape data of the object road and the branch received.

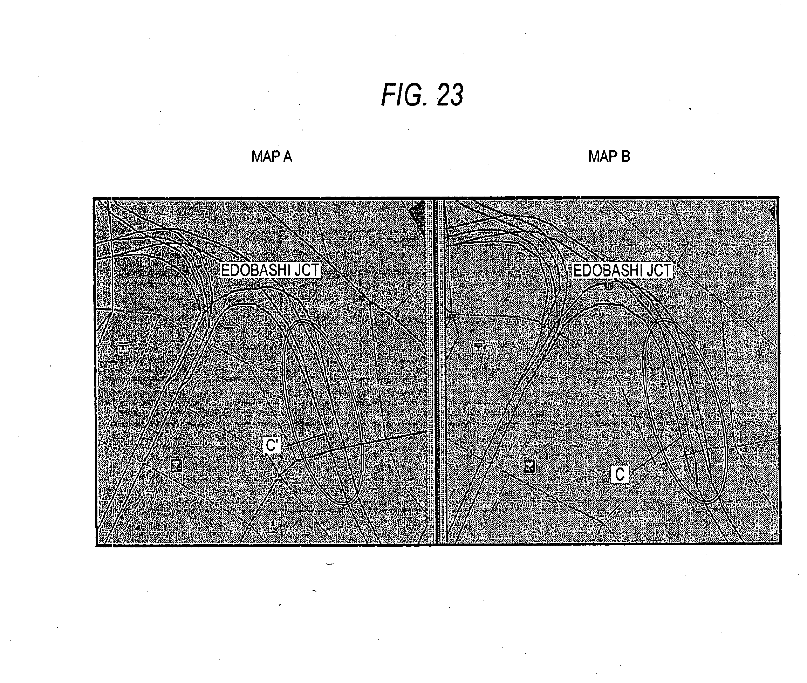

Fig. 23 exemplifies a Map A of a scale of 1/25,000 and a map B of a scale of 1/2,500 representing the shapes of the trunk and the connection roads (i.e., the junction lanes) of the same area. In the map (i.e., the Map B) of the smaller diminishing scale, the junction (as enclosed by an ellipse) of the connection road is represented more finely because of a higher precision so that it has longer connection roads than those of the map (i.e., the Map A) having a larger diminishing scale. Thus, the branching position of the road branching at a smaller angle is considerably different in dependence upon the precision of the map.

In this case, if the transmission side transmits the shape data of the connection roads represented in the Map B whereas the reception side specifies the position with the Map A, then a part of the connection roads are erroneously identified as the trunk. If, therefore, an event of the closed road (or the traffic accident) occurs so that the transmission side transmits the shape data of the connection roads and the information on the distance from the branching position of the connection roads to the event position, the reception sides misjudges that the event has occurred at the point C' of the trunk. The "event (or information)" means the object of information to be transmitted, such as the delay, the accident or the POI (Point Of Interest).

This embodiment is described as to the location identification method for specifying the branching position of a branch correctly on the digital map so as to avoid such misjudgment.

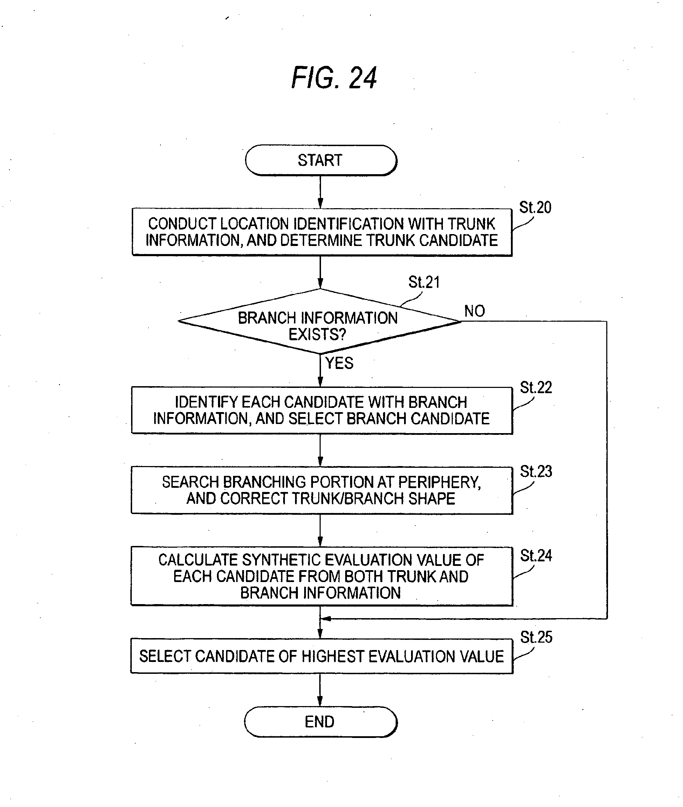

Fig. 24 shows the location identification procedure of this case. The reception side having received the shape data (Fig. 14) containing the road shape data of the trunk and the branch shape data of the branch conduct the location identification on the road shape data of the trunk to correspond to its own digital map data, and selects the candidate road for the trunk to calculate the evaluation value of each candidate road (at Step 20). In case the received information contains the branch shape data (that is, in case the answer of Step 21 is Yes), the location identification is made using the branch shape data to select the branch candidate for each candidate road (at Step 22).

On the own digital map, the branching portion is searched from the periphery of the point, which is the "Node No. from Starting End of Shape Data Referred" of the branching point (Fig. 14) of the branch, and the trunk shape and the branch shape are so corrected that the branch may branch at that branching portion from the trunk (at Step 23).

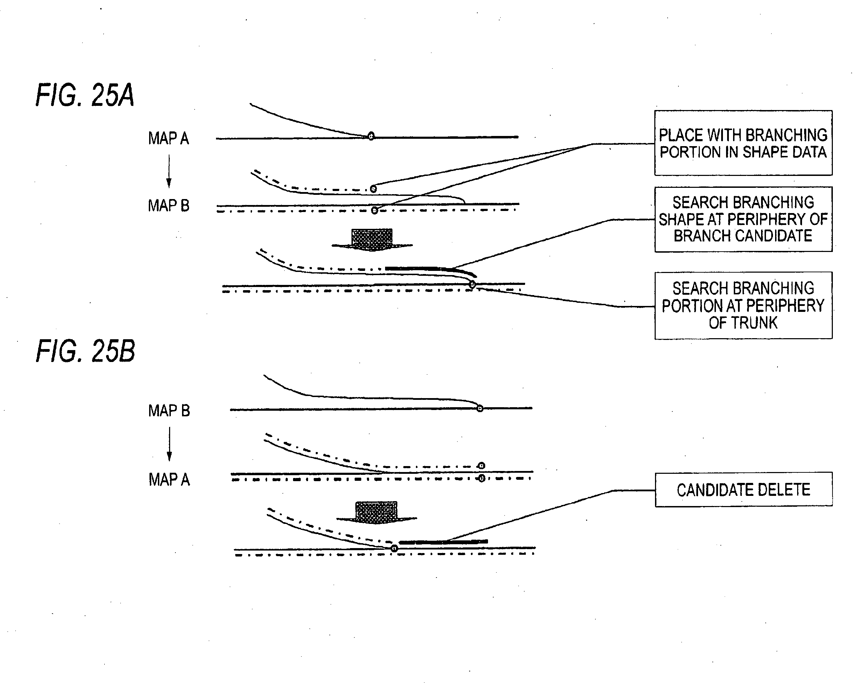

Fig. 25 schematically shows this correcting operation. Fig. 25(a) shows the case, in which the shape data are transmitted from the transmission side having the Map A to the reception side having the Map B. The reception side selects the trunk candidate and the branch candidate from its own Map B and sets the point corresponding to the branching point in the Map A, on those candidates thereby to search the branching portion from the periphery of that point. The reception side searches the branching shape (i.e., a thick line portion) leading to the branching portion on the trunk candidate, from the periphery of the corresponding point of the branch candidate thereby to add the branching shape to the branch candidate.

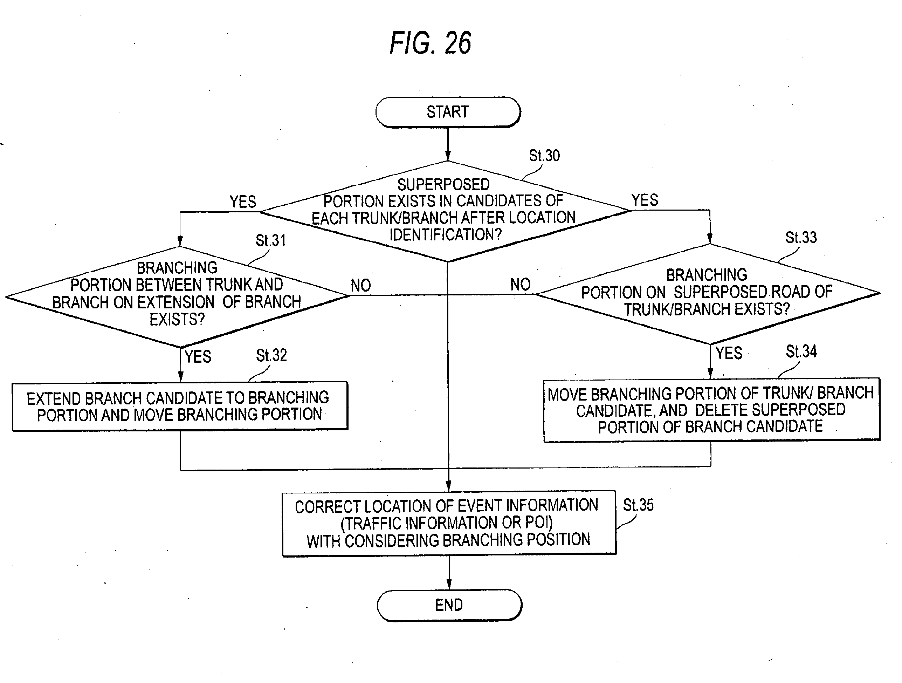

Fig. 25(b) shows the case, in which the shape data are transmitted from the transmission side having the Map B to the reception side having the Map A. The reception side selects the trunk candidate and the branch candidate from its own Map A, and sets the point corresponding to the branching point on the Map B thereby to search the branching portion from the periphery of that point on the trunk candidate. In case the periphery of the corresponding point of the branch candidate is searched to find that the branching portion is positioned on the branch candidate, the branch candidate shape (i.e., a thick line portion) is deleted from the corresponding point to the branching portion. In short, there are executed: the step of searching the branching point, where the object-road candidate and the branch candidate or its extension branch on the digital map; and the step of correcting the shape of the branch candidate into a shape to branch at the branching point from the object road candidate. Fig. 26 is a flow chart showing the procedure of this correcting operation.

It is decided (at Step 30) whether or not a superposed portion exists between the trunk candidate and the branch candidate. In the case of no superposed portion (i.e., in the case of Fig. 25(a)), next it is decided (at Step 31) whether or not the trunk/branch branching portion exists on the extension of the branch candidate. In the case of the trunk/branch branching portion existing, the branch candidate is extended to the branching portion thereby to move the branching portion (at Step 32). In case the superposed portion exists between the trunk candidate and the branch candidate (i.e., in the case of Fig. 25(b)), it is decided (at Step 33) whether or not the branching portion exists on the superposed road of the trunk/branch. In the case of the branching portion existing, the branching portion is moved to the branching portion thereby to delete the superposed portion of the branch candidate (at Step 34).

After the corrections of the trunk/branch shapes, the synthetic evaluation value of each trunk candidate is calculated from both the trunk candidate and the branch candidate (at Step 24), and the trunk candidate of the highest evaluation value is selected (at Step 25). Here, in case the branch shape data are not included in the shape data (that is, in case the answer of Step 21 is No), the routine transfers to Step 25, at which the trunk candidate of the highest evaluation value determined at Step 20 is selected.

The synthetic evaluation value of the trunk candidate is calculated on the basis of:

(1) the shape similarity and the spacing distance between the trunk shape and the trunk candidate;
(2) the shape similarity and the spacing distance between the branch shape and the branch candidate;
(3) the presence/absence of the branching portion, and the positional displacement of the branching portion, if any; and
(4) the relative shape similarity between the trunk/branch around the branching portion.

The reception side corrects the event information (e.g., the traffic information or the POI) with taking into account the branching position (i.e., the corrected branching position of the case, in which the branching position is corrected at Step 32 and at Step 33). In short, the position of the aforementioned "object" is related to the object road data or the assistance shape data so that the position of that "object" is corrected.

By these operations on the reception side, the branching position to be transmitted by the transmission side is correctly specified on the digital map on the reception side. Therefore, the transmission side can designate the connection road with the branching position or can transmit the event position using the branching position for the reference point (or the marker position).

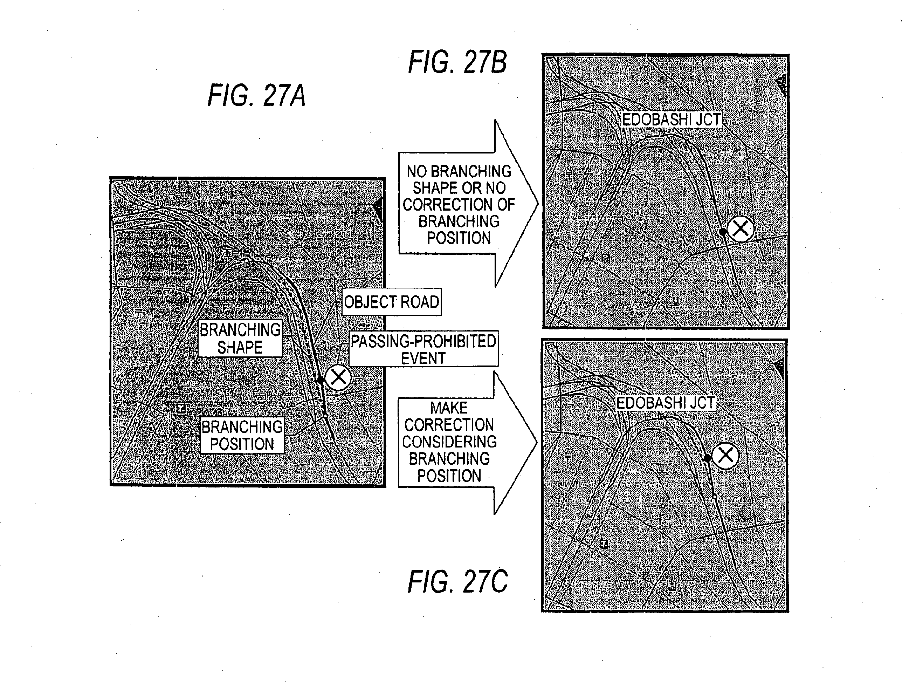

Fig. 27 schematically shows the case (Fig. 17(a)), in which the transmission side using a high precision map transmits the event information(e.g., the closed road) of the object road together with the object road shape and the branching shape, the case (Fig. 27(b)), in which the reception side using a poor precision map specifies the event position without correcting the branching position, and the case (Fig. 27(c)), in which the reception side corrects the branching position by the method of this embodiment and specifies the event position with taking the branching position into account.

In the case of Fig. 27(b), an error on the latitude and longitude is small from that of the transmission side at the closed road position, but the "closed road" is displayed at a mistaken position on the road network. In the case of Fig. 27(c), in which the branching position is corrected by the method of this embodiment, on the other hand, the "closed road" is displayed at the correct position on the road network. In other words, the position of the event information relating to the object road shape data and the branch shape data are corrected with reference to the shape of the branch corrected candidate.

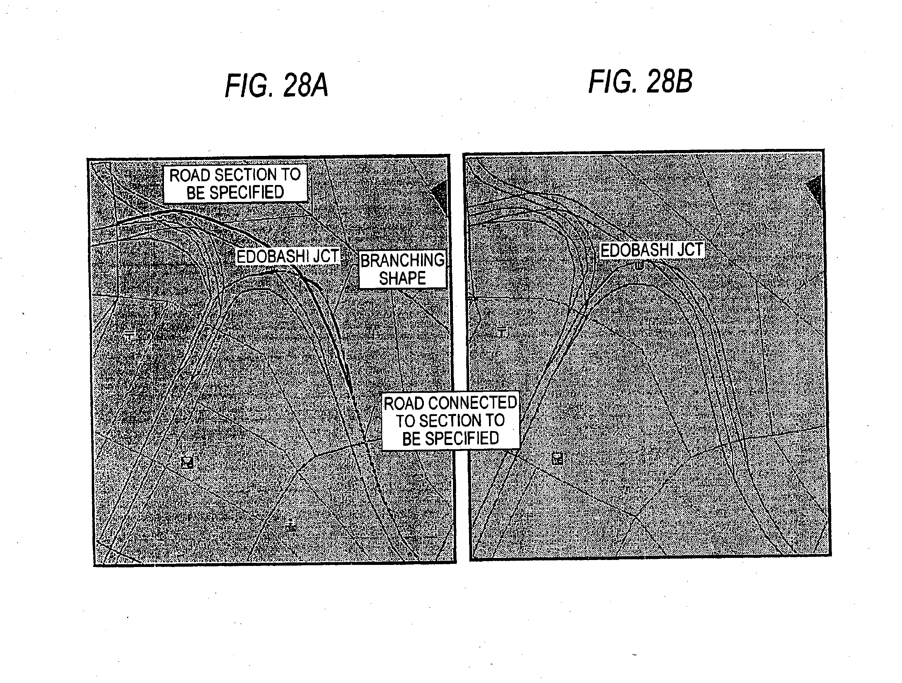

Since the reception side searches the periphery of the branching position transmitted from the transmission side and specifies the branching position of the branch on its own map, as described above, the transmission side preferably transmits not only the shape data of-the-trunk section (in a thick line) and the branch section (in a single dotted line) to be transmitted but also the shape data of the road portion (in a single-dotted line) to be connected to this section as shown in Fig. 28(a). The length to the road to be added is qualitatively the map error difference between the map (Fig. 28(a)) on the transmission side and the map (Fig. 28(b)) on the reception side. In case the transmission side uses a map of 1/25,000 whereas the reception side uses a map of 1/2,500, the map error different is about 100 m, but it is desired to add the road shape of about 100 to 200 m for an allowance.

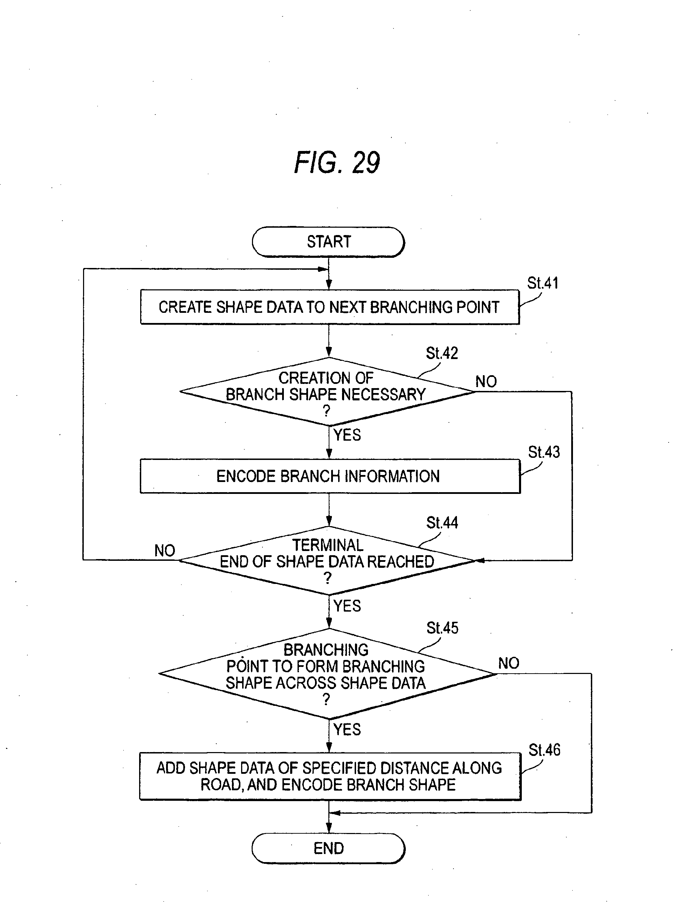

The flow chart of Fig. 29 shows the procedure for the transmission side to create the transmission shape data while considering the addition of the road shape.

The road shape data are created from the starting point of the truck section to be transmitted to the next branching point (at Step 41). It is decided (at Step 42) whether or not it is necessary to create the branch shape of the branch from that branching point. The branch shape data, if necessary, are created (at Step 3). If not, the branch shape data are not created. If the branching point is not the terminal of the trunk section (at Step 44), the routine returns to Step 41 and the road shape data to the next branching point is created, and the operations of Step 41 to Step 43 are repeated until the terminal end of the trunk section is reached. The operations until here are identical to those of Fig. 12.

When the terminal end of the trunk section is reached, it is decided (at Step 45) whether or not the branching point at which the branch shape is to be created exists before or after the created road shape data (i.e., at the starting end or the terminal end of the trunk section). If this answer is Yes, the road shape data of the specified distance along the trunk is added to create the branch shape data (at Step 46).

By these operations, the transmission side creates and transmits the road shape data of the trunk and the branch shape data of the branch so that the reception side can specify the trunk section and the branch section highly precisely even in case the reception side uses a digital map of a diminishing scale different from that of the transmission side.

Thus, it is highly effective for the transmission side and the reception side to transmit not only the road shape of the object road but also the branch shape. Therefore, the reception side may transmit the branch shape widely irrespective of the angle of the branch or the intersection. In this case, the reception decides whether or not the branch shape is to be referred to (e.g., not referred to when the evaluation value exhibits an extremely excellent value) on the basis of the evaluation value of the object road candidate determined either at Step 10 of the flow chart of Fig. 15 or at Step 20 of the flow chart of Fig. 24. Then, the branch shape data can be utilized without being followed by a heavy load.

(Seventh Embodiment)

The seventh embodiment of the invention is described as to a correction method of the case, in which the road section absent from the map data on the reception side is included in the position codes from the transmission side.

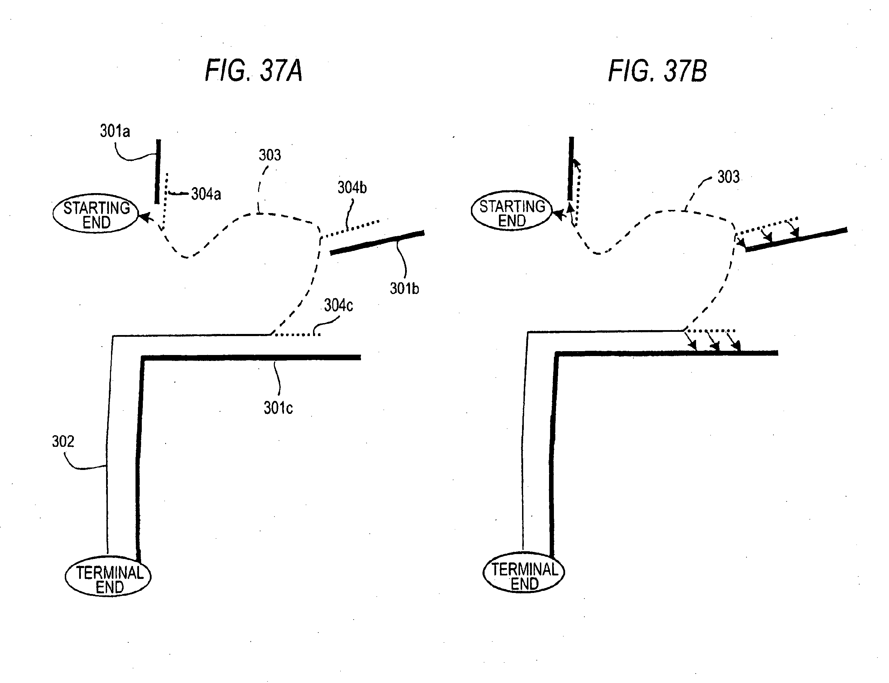

In the map data on the reception side of Fig. 37(a), existing road networks 301 a, 301b and 301 c are present. On the other hand, the transmission side transmits connection roads 304a, 304b and 304c which correspond to the roads 301 a, 301 b and 301 c on the reception side and are to be specified at locations thereof.

In the position codes from the transmission side, there is not only an object road (or object road data) 302 as the object road data but also a road 303 connected to that road 302, which forms part of the object road data.

Since the section 303 is a new road, however, the map data corresponding to the section 303 does not exist on the reception side. Even if, therefore, the section 303 is included in the position codes coming from the transmission side, it is impossible to find the road which corresponds to the section 303 and to the object road.

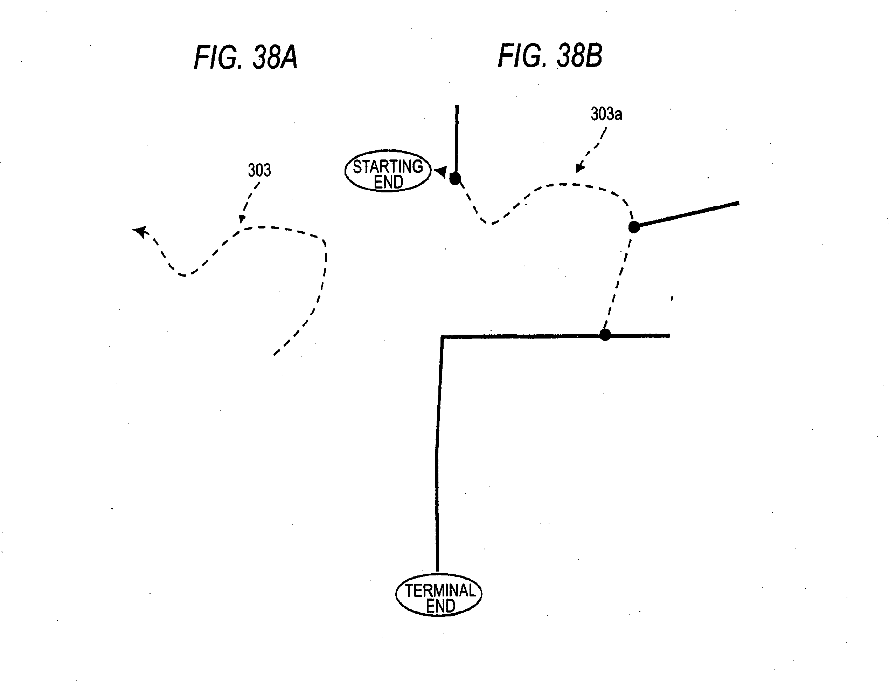

In this case, the section (or the virtual route) 303 is created assuming that the section 303 is present on the reception side map data. For this creation method, a variety of existing techniques (e.g., the method for encoding and decoding an object in a traffic road net, as disclosed in WO01/018769) can be used. In this embodiment, the reception connection roads 304a, 304b and 304c are used as the assistance shape data for the creations. In case the connection roads 304a, 304b and 304c are identified to correspond to the roads 301 a, 301 b and 301 c on the reception side, respectively, as shown in Fig. 37(b), corrections are made to move the connection roads 304a, 304b and 304c schematically in the direction of arrow. According to these corrections, the shape of the section 303 is corrected from Fig. 38(a) to a shape 303a of Fig. 38(b) and is displayed on the map of the reception side. Thus, the position codes are precisely decoded. Specifically, when a new route absent from the map on the reception side is to be identified, the precision of reproduction of the shape of the new route or a portion of the object road can be enhanced by using the assistance shape data.

(Eighth Embodiment)

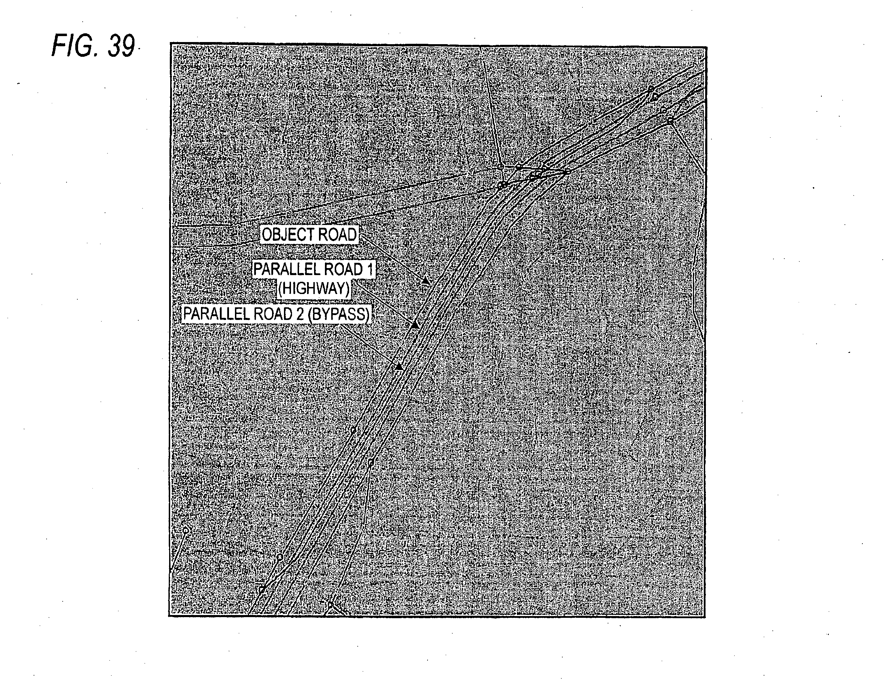

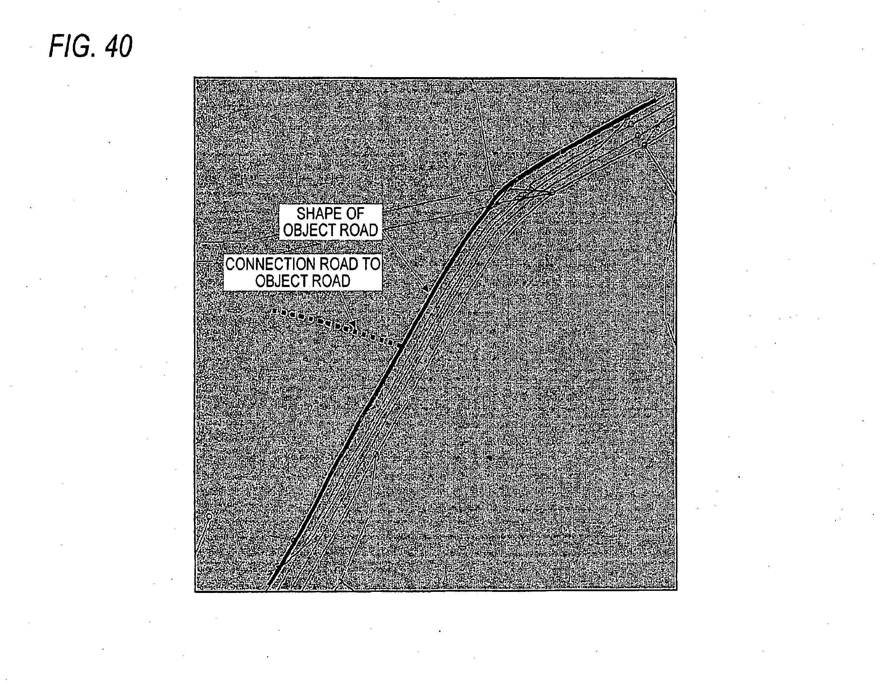

In this embodiment, there is described a specific example of the location identification of the case in which there is another road parallel and similar to the periphery of the object road. In case a parallel road (e.g., a highway) 1 and a parallel road (e.g., a bypass) 2 are present adjacent to the object road, as shown in Fig. 39, it seems that the object road may be misunderstood as the parallel road 1 or the parallel road 2. In this embodiment, therefore, the connection road to be connected to the object road is incorporated as the assistance shape data into the position codes, as shown in Fig. 40. Specifically, the assistance shape data including at least one of the connection position, the shape and the attribute of that connection road are transmitted together with the object road shape data to the transmission side.
The connection road of Fig. 40 is not connected to the parallel road 1 or the parallel road 2. It is accordingly possible to reliably discriminate the parallel road 1 or the parallel road 2 from the object road and to specify the object road. It is, therefore, possible to prevent the parallel road 1 or the parallel road 2 from being misjudged as the object road.

(Ninth Embodiment)

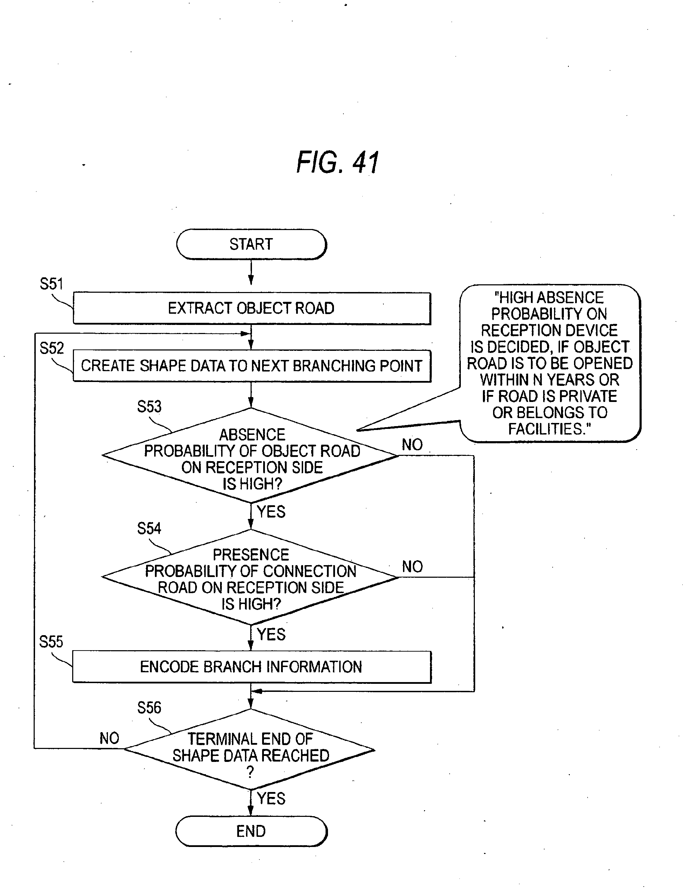

This embodiment is described as to the operations of the case in which the object road on the decode side includes such a section as may be highly possibly absent from the transmission destination of the position codes, i.e., from the map data on the reception side, as shown in Fig. 37. In case it is highly probable or possible that the object road is absent from the reception side, as at Step 53 of Fig. 41, and the connection road to that object road is present on the reception side, as at Step 54, the encoder side creates the assistance shape data (or the branch shape data) based on the connection road (at Step 55). Here can be used various grounds for deciding the possibility at Step 53. These deciding grounds can be the opening year of the road or the type (e.g., a private road or a road belonging to facilities) of the road. With this, the operations of the steps of Fig. 37 and Fig. 38 can be smoothly performed.
The program for causing the information transmission device 30 to provide the positional information for the digital map is also contained in the scope of the invention. This program causes the information providing device to execute the procedure for extracting the object road shape data corresponding to the transmission object road, the procedure for extracting the branch shape data corresponding to the branch intersecting with or branching from the object road, from the digital map database, and the procedure for transmitting the object road shape data and the branch shape data extracted, to the outside. There is also provided a program product having that program recorded on a recording medium. The recording medium is not limited in kind but can be exemplified by all kinds of media such as the CD, the MD or the hard disk. The program product having a specific program recorded in a predetermined medium can be read out by a predetermined computer or hardware.
Moreover, the program for causing the information application device 40 to receive and utilize the positional information for the digital map is also contained in the range of the invention. This program causes the information application device to execute the procedure for accepting the object road shape data of the object road and the branch shape data corresponding to the branch intersecting with or branching from the object road, from the outside, the procedure for selecting the object road candidate from the digital map database with reference to the object road shape data, the procedure for selecting the branch candidate from the digital map database with reference to the branch shape data, and the procedure for finally selecting the object road candidate to become the object road, with reference to the object road candidate and the branch candidate. There is also provided a program product having that program recorded on a recording medium.
The aforementioned program or program product may be directly incorporated into the information transmission device 30 or the information application device 40 or may be incorporated into another medium drive device so as to control the information transmission device 30 and the information application device 40 indirectly. Of course, the program or the program product may also be executed by the computer so that the computer may control the information transmission device 30 and the information application device 40.
In the foregoing embodiments, in the decode on the reception side, the object road is identified by using both the object road shape data and the assistance shape data in the position codes. In case, however, the location identification seems to have been hardly mistaken (e.g., in case the branch branches at a large angle from the object road or in case the branch is not parallel to the object road from the branching point), it is not always necessary to perform the decode operation. After the position codes containing such two kinds of data were received, for example, the object road shape data and the assistance shape data are separated. By referring to only the object road shape data or by extracting only the object road shape data, the object road may be specified on the digital map. As a result, it is possible to reduce the processing load on the reception side.
Although the invention has been described in connection with the specific embodiments, it is apparent to those skilled in the art that the invention could be modified or corrected in various manners without departing from the scope and scope of the invention.

The present application for patent is based on Japanese Patent Application (No. 2003-285807) filed on August 4, 2003 and Japanese Patent Application (No. 2004-028040) filed on February 4, 2004.

INDUSTRIAL APPLICABILITY

The positional information transmission method, and the program, the program product, the system and the device for executing that method can be widely applied to the case, in which the road position on the digital map such as the object road of the traffic information, the traveled path of the probe car or the route information to the destination is to be transmitted; so that the transmission of a precise road position can be realized.

**Claims**

1.  A system including a transmission device (30) having a first digital map database (32) and a reception device (40) having a second digital map databas (46) and specifying a second object road section on a second digital map stored in the second digital map database corresponding to a first object road section on a first digital map stored in the first digital map database,

    wherein the transmission device includes:

    > a road shape data extracting unit (33) for extracting road shape data formed of nodes indicating the first object road section from the first digital map database;
    > a branch shape data extracting unit (34) for selecting a branch connected to the first object road section and extracting branch shape data formed of nodes indicating the branch from the first digital map database;
    > a position information generating unit (35) for generating position information which includes:
    >
    >> coordinate information of the nodes forming the extracted road shape data;
    >> coordinate information of the nodes forming the extracted branch shape data; and
    >> connection positional information indicating the number of nodes from a starting point of the nodes indicating the object road section to a node at a position connected to the branch: and
    >
    > a transmitting unit (38) for transmitting the generated position information; and

    wherein the reception device (40) includes:

    > a reception unit (41) for receiving the position information; and
    > a specifying unit (47 - 49) for specifying a position of the second object road section and a branch connected to the second object road section corresponding to the first object road section and the branch connected to the first object road section by matching, using the coordinate information and the connection positional information included in the position information on the second digital map.

2.  A transmission device (30) having a first digital map database (32) and adapted for transmitting position information to a reception device (40) having a second digital map database (46) for specifying a second object road section on a second digital map stored in the second digital map database corresponding to a first object road section on a first digital map stored in the first digital map database, the transmission device comprising:

    > a road shape data extracting unit (33) for extracting road shape data formed of nodes indicating the first object road section from the first digital map database;
    > a branch shape data extracting unit (34) for selecting a branch connected to the first object road section and extracting branch shape data formed of nodes indicating the branch from the first digital map database;
    > a position information generating unit (35) for generating position information which includes:
    >
    >> coordinate information of the nodes forming the extracted road shape data;
    >> coordinate information of the nodes forming the extracted branch shape data; and
    >> connection positional information indicating the number of nodes from a starting point of the nodes indicating the object road section to a node at a position connected to the branch; and

a transmitting unit (38) for transmitting the generated position information to the reception device.

3. A reception device (40) having a second digital map database (46), adapted for receiving position information having the structure of the position information as transmitted by a transmission device according to claim 2, and specifying a second object road section on a second digital map stored in the second digital map database corresponding to a first object road section on a first digital map, the reception device comprising:

a reception unit (41) for receiving the position information as transmitted by the transmission device according to claim 2, said position information including coordinate information of the nodes forming the extracted road shape data; coordinate information of the nodes forming the extracted branch shape data; and connection positional information indicating the number of nodes from a starting point of the nodes indicating the object road section to a node at a position connected to the branch; and

a specifying unit (47 - 49) for specifying a position of the second object road section and a branch connected to the second object road section corresponding to the first object road section and the branch connected to the first object road section by matching, using the coordinate information and the connection positional information included in the position information on the second digital map.

4. A transmission method executed by a computer of a transmission device (30) having a first digital map database (32), and adapted for transmitting position information to a reception device (40) having a second digital map database (46) for specifying a second object road section on a second digital map stored in the second digital map database corresponding to a first object road section on a first digital map stored in the first digital map database, the transmission method comprising:

a step for extracting road shape data formed of nodes indicating the first object road section from the first digital map database;

a step for selecting a branch connected to the first object road section and extracting branch shape data formed of nodes indicating the branch from the first digital map database;

a step for generating position information which includes:

coordinate information of the nodes forming the extracted road shape data;
coordinate information of the nodes forming the extracted branch shape data; and
connection positional information indicating the number of nodes from a starting point of the nodes indicating the object road section to a node at a position connected to the branch; and

a step for transmitting the generated position information to the reception device.

5. A reception method executed by a computer of a reception device (40) having a second digital map database (46), and specifying a second object road section on a second digital map stored in the second digital map database corresponding to a first object road section on a first digital map by receiving position information having the structure of the position information as transmitted by the transmission method according to claim 4, the reception method comprising:

a step for receiving the position information as transmitted by the transmission method according to claim 4, said position information including coordinate information of the nodes forming the extracted road shape data; coordinate information of the nodes forming the extracted branch shape data; and connection positional information indicating the number of nodes from a starting point of the nodes indicating the object road section to a node at a position connected to the branch; and

a step for specifying a position of the second object road section and a branch connected to the second object road section corresponding to the first object road section and the branch connected to the first object road section by matching, using the coordinate information and the connection positional information included in the position information on the second digital map.

6. A transmission program causing a computer of a transmission device (30) having a first digital map database (32) to execute procedures for transmitting position information to a reception device (40) having a second digital map database (46) for specifying a second object road section on a second digital map stored in the second digital map database corresponding to a first object road section on a first digital map stored in the first digital map database, the procedure comprising:

a step for extracting road shape data formed of nodes indicating the first object road section from the first digital map database;

a step for selecting a branch connected to the first object road section and extracting branch shape data formed of nodes indicating the branch from the first digital map database;

a step for generating position information which includes:

coordinate information of the nodes forming the extracted road shape data;
coordinate information of the nodes forming the extracted branch shape data; and
connection positional information indicating the number of nodes from a starting point of the nodes indicating the object road section to a node at a position connected to the branch; and

a step for transmitting the generated position information to the reception device.

**7.** A reception program causing a computer of a reception device (40) having a second digital map database (46) to execute a procedure for specifying a second object road section on a second digital map stored in the second digital map database corresponding to a first object road section on a first digital map and a procedure for receiving position information having the structure of the position information as transmitted by executing the transmission program according to claim 6, said position information including coordinate information of the nodes forming the extracted road shape data; coordinate information of the nodes forming the extracted branch shape data; and connection positional information indicating the number of nodes from a starting point of the nodes indicating the object road section to a node at a position connected to the branch, the procedure comprising:

a step for receiving the position information transmitted by executing the program according to claim 6; and
a step for specifying a position of the second object road section and a branch connected to the second object road section corresponding to the first object road section and the branch connected to the first object road section by matching, using the coordinate information and the connection positional information included in the position information on the second digital map.

## Patentansprüche

**1.** System, umfassend eine Sendevorrichtung (30), die eine erste Digitalkartendatenbank (32) aufweist, und eine Empfangsvorrichtung (40), die eine zweite Digitalkartendatenbank (46) aufweist und einen zweiten Objekt-Straßenabschnitt auf einer zweiten digitalen Karte, die in der zweiten Digitalkartendatenbank gespeichert ist, entsprechend einem ersten Objekt-Straßenabschnitt auf einer ersten digitalen Karte spezifiziert, die in der ersten Digitalkartendatenbank gespeichert ist,
wobei die Sendevorrichtung umfasst:

eine Straßenform-Extraktionseinheit (33) zum Extrahieren von Straßenformdaten, die aus Knoten gebildet sind, die den ersten Objekt-Straßenabschnitt anzeigen, aus der ersten Digitalkartendatenbank;
eine Abzweigungsformdaten-Extraktionseinheit (34) zum Auswählen einer Abzweigung, die mit dem ersten Objekt-Straßenabschnitt verbunden ist, und Extrahieren von Abzweigungsformdaten, die aus Knoten gebildet sind, welche die Abzweigung anzeigen, aus der ersten Digitalkartendatenbank;
einen Positionsinformationserzeugungseinheit (35) zum Erzeugen von Positionsinformationen, welche umfassen:

Koordinateninformationen der Knoten, welche die extrahierten Straßenformdaten bilden;
Koordinateninformationen der Knoten, welche die extrahierten Abzweigungsformdaten bilden; und
positionelle Verbindungsinformationen, welche die Anzahl von Knoten von einem Anfangspunkt der Knoten, welche den Objekt-Straßenabschnitt anzeigen, bis zu einem Knoten an einer Position anzeigen, die mit der Abzweigung verbunden ist; und

eine Sendeeinheit (38) zum Senden der erzeugten Positionsinformationen; und

wobei die Empfangsvorrichtung (40) umfasst:

eine Empfangseinheit (41) zum Empfangen der Positionsinformationen; und
eine Spezifizierungseinheit (47 - 49) zum Spezifizieren einer Position des zweiten Objekt-Straßenabschnitts und einer Abzweigung, die mit dem zweiten Objekt-Straßenabschnitt verbunden ist, entsprechend dem ersten Objekt-Straßenabschnitt und der Abzweigung, die mit dem ersten Objekt-Straßenabschnitt verbunden ist, durch Vergleichen unter Verwendung der Koordinationsinformationen und der positionellen Verbindungsinformationen, die in den Positionsinformationen auf der zweiten digitalen Karte enthalten sind.

**2.** Sendevorrichtung (30), die eine erste Digitalkartendatenbank (32) aufweist und zum Senden von Positionsinformationen an eine Empfangsvorrichtung (40) mit einer zweiten Digitalkartendatenbank (46) zum Spezifizieren eines zweiten Objekt-Straßenabschnitts auf einer zweiten digitalen Karte, die in der zweiten Digitalkartendatenbank gespeichert ist, entsprechend einem ersten Objekt-Straßenabschnitt auf einer ersten digitalen Karte, die in der ersten Digitalkartendatenbank gespeichert ist, ausgelegt ist, wobei die Sendevorrichtung umfasst:

eine Straßenform-Extraktionseinheit (33) zum Extrahieren von Straßenformdaten, die aus Knoten gebildet sind, die den ersten Objekt-Straßenabschnitt anzeigen, aus der ersten Digitalkartendatenbank;
eine Abzweigungsformdaten-Extraktionseinheit (34) zum Auswählen einer Abzweigung, die mit dem ersten Objekt-Straßenabschnitt verbunden ist, und Extrahieren von Abzweigungsformdaten, die aus Knoten gebildet sind, welche die Abzweigung anzeigen, aus der ersten Digitalkartendatenbank;
einen Positionsinformationserzeugungseinheit (35) zum Erzeugen von Positionsinformationen, welche umfassen:

Koordinateninformationen der Knoten, welche die extrahierten Straßenformdaten bilden;
Koordinateninformationen der Knoten, welche die extrahierten Abzweigungsformdaten bilden; und
positionelle Verbindungsinformationen, welche die Anzahl von Knoten von einem Anfangspunkt der Knoten, welche den Objekt-Straßenabschnitt anzeigen, bis zu einem Knoten an einer Position anzeigen, die mit der Abzweigung verbunden ist; und

eine Sendeeinheit (38) zum Senden der erzeugten Positionsinformationen an die Empfangsvorrichtung.

**3.** Empfangsvorrichtung (40), die eine zweite Digitalkartendatenbank (46) aufweist und zum Empfangen von Positionsinformationen mit der Struktur der Positionsinformationen, wie durch eine Sendevorrichtung nach Anspruch 2 gesendet, und Spezifizieren eines zweiten Objekt-Straßenabschnitt auf einer zweiten digitalen Karte, die in der zweiten Digitalkartendatenbank gespeichert ist, entsprechend einem ersten Objekt-Straßenabschnitt auf einer ersten digitalen Karte ausgelegt ist, wobei die Empfangsvorrichtung umfasst:

eine Empfangseinheit (41) zum Empfangen der Positionsinformationen, wie durch die Sendevorrichtung nach Anspruch 2 gesendet, wobei die Positionsinformationen umfassen:

Koordinateninformationen der Knoten, welche die extrahierten Straßenformdaten bilden;
Koordinateninformationen der Knoten, welche die extrahierten Abzweigungsformdaten bilden; und
positionelle Verbindungsinformationen, welche die Anzahl von Knoten von einem Anfangspunkt der Knoten, welche den Objekt-Straßenabschnitt anzeigen, bis zu einem Knoten an einer Position anzeigen, die mit der Abzweigung verbunden ist; und

eine Spezifizierungseinheit (47 - 49) zum Spezifizieren einer Position des zweiten Objekt-Straßenabschnitts und einer Abzweigung, die mit dem zweiten Objekt-Straßenabschnitt verbunden ist, entsprechend dem ersten Objekt-Straßenabschnitt und der Abzweigung, die mit dem ersten Objekt-Straßenabschnitt verbunden ist, durch Vergleichen unter Verwendung der Koordinationsinformationen und der positionellen Verbindungsinformationen, die in den Positionsinformationen auf der zweiten digitalen Karte enthalten sind.

**4.** Sendeverfahren, das von einem Computer einer Sendevorrichtung (30) ausgeführt wird, die eine erste Digitalkartendatenbank (32) aufweist und zum Senden von Positionsinformationen an eine Empfangsvorrichtung (40) mit einer zweiten Digitalkartendatenbank (46) zum Spezifizieren eines zweiten Objekt-Straßenabschnitts auf einer zweiten digitalen Karte, die in der zweiten Digitalkartendatenbank gespeichert ist, entsprechend einem ersten Objekt-Straßenabschnitt auf einer ersten digitalen Karte, die in der ersten Digitalkartendatenbank gespeichert ist, ausgelegt ist, wobei das Sendeverfahren umfasst:

einen Schritt zum Extrahieren von Straßenformdaten, die aus Knoten gebildet sind, die den ersten Objekt-Straßenabschnitt anzeigen, aus der ersten Digitalkartendatenbank;
einen Schritt zum Auswählen einer Abzweigung, die mit dem ersten Objekt-Straßenabschnitt verbunden ist, und Extrahieren von Abzweigungsformdaten, die aus Knoten gebildet sind, welche die Abzweigung anzeigen, aus der ersten Digitalkartendatenbank;
einen Schritt zum Erzeugen von Positionsinformationen, welche umfassen:

Koordinateninformationen der Knoten, welche die extrahierten Straßenformdaten bilden;
Koordinateninformationen der Knoten, welche die extrahierten Abzweigungsformdaten bilden; und
positionelle Verbindungsinformationen, welche die Anzahl von Knoten von einem Anfangspunkt der Knoten, welche den Objekt-Straßenabschnitt anzeigen, bis zu einem Knoten an einer Position anzeigen, die mit der Abzweigung verbunden ist; und

einen Schritt zum Senden der erzeugten Positionsinformationen an die Empfangsvorrichtung.

5. Empfangsverfahren, das von einem Computer einer Empfangsvorrichtung (40) ausgeführt wird, die eine zweite Digitalkartendatenbank (46) aufweist und einen zweiten Objekt-Straßenabschnitt auf einer zweiten digitalen Karte, die in der zweiten Digitalkartendatenbank gespeichert ist, entsprechend einem ersten Objekt-Straßenabschnitt auf einer ersten digitalen Karte durch Empfangen von Positionsinformationen mit der Struktur der Positionsinformationen, wie durch das Sendeverfahren nach Anspruch 4 gesendet, spezifiziert, wobei das Empfangsverfahren umfasst:

einen Schritt zum Empfangen der Positionsinformationen, wie durch das Sendeverfahren nach Anspruch 4 gesendet, wobei die Positionsinformationen umfassen:

Koordinateninformationen der Knoten, welche die extrahierten Straßenformdaten bilden;
Koordinateninformationen der Knoten, welche die extrahierten Abzweigungsformdaten bilden; und
positionelle Verbindungsinformationen, welche die Anzahl von Knoten von einem Anfangspunkt der Knoten, welche den Objekt-Straßenabschnitt anzeigen, bis zu einem Knoten an einer Position anzeigen, die mit der Abzweigung verbunden ist; und

einen Schritt zum Spezifizieren einer Position des zweiten Objekt-Straßenabschnitts und einer Abzweigung, die mit dem zweiten Objekt-Straßenabschnitt verbunden ist, entsprechend dem ersten Objekt-Straßenabschnitt und der Abzweigung, die mit dem ersten Objekt-Straßenabschnitt verbunden ist, durch Vergleichen unter Verwendung der Koordinationsinformationen und der positionellen Verbindungsinformationen, die in den Positionsinformationen der zweiten digitalen Karte enthalten sind.

6. Sendeprogramm, das einen Computer einer Sendevorrichtung (30) mit einer ersten Digitalkartendatenbank (32) veranlasst, Prozeduren zum Senden von Positionsinformationen an eine Empfangsvorrichtung (40) mit einer zweiten Digitalkartendatenbank (46) zum Spezifizieren eines zweiten Objekt-Straßenabschnitts auf einer zweiten digitalen Karte, die in der zweiten Digitalkartendatenbank gespeichert ist, entsprechend einem ersten Objekt-Straßenabschnitt auf einer ersten digitalen Karte, die in der ersten Digitalkartendatenbank gespeichert ist, auszuführen, wobei die Prozedur umfasst:

einen Schritt zum Extrahieren von Straßenformdaten, die aus Knoten gebildet sind, die den ersten Objekt-Straßenabschnitt anzeigen, aus der ersten Digitalkartendatenbank;
einen Schritt zum Auswählen einer Abzweigung, die mit dem ersten Objekt-Straßenabschnitt verbunden ist, und Extrahieren von Abzweigungsformdaten, die aus Knoten gebildet sind, welche die Abzweigung anzeigen, aus der ersten Digitalkartendatenbank;
einen Schritt zum Erzeugen von Positionsinformationen, welche umfassen:

Koordinateninformationen der Knoten, welche die extrahierten Straßenformdaten bilden;
Koordinateninformationen der Knoten, welche die extrahierten Abzweigungsformdaten bilden; und
positionelle Verbindungsinformationen, welche die Anzahl von Knoten von einem Anfangspunkt der Knoten, welche den Objekt-Straßenabschnitt anzeigen, bis zu einem Knoten an einer Position anzeigen, die mit der Abzweigung verbunden ist; und

einen Schritt zum Senden der erzeugten Positionsinformationen an die Empfangsvorrichtung.

7. Empfangsprogramm, das einen Computer einer Empfangsvorrichtung (40) mit einer zweiten Digitalkartendatenbank (46) veranlasst, eine Prozedur zum Spezifizieren eines zweiten Objekt-Straßenabschnitts auf einer zweiten digitalen Karte, die in der zweiten Digitalkartendatenbank gespeichert ist, entsprechend einem ersten Objekt-Straßenabschnitt auf einer ersten digitalen Karte und eine Prozedur zum Empfangen von Positionsinformationen mit der Struktur der Positionsinformationen, wie durch das Ausführen des Sendeprogramms nach Anspruch 6 gesendet, auszuführen, wobei die Positionsinformationen umfassen:

Koordinateninformationen der Knoten, welche die extrahierten Straßenformdaten bilden;
Koordinateninformationen der Knoten, welche die extrahierten Abzweigungsformdaten bilden; und
positionelle Verbindungsinformationen, welche die Anzahl von Knoten von einem Anfangspunkt der Knoten, welche den Objekt-Straßenabschnitt anzeigen, bis zu einem Knoten an einer Position anzeigen, die mit der Abzweigung verbunden ist; wobei die Prozedur umfasst:

einen Schritt zum Empfangen der Positionsinformationen, wie durch das Ausführen des Programms nach Anspruch 6 gesendet, und
einen Schritt zum Spezifizieren einer Position des zweiten Objekt-Straßenabschnitts und einer Abzweigung, die mit dem zweiten Objekt-Straßenabschnitt verbunden ist, entsprechend dem ersten Objekt-Straßenabschnitt und der Abzweigung, die mit dem ersten Objekt-Straßenabschnitt verbunden ist, durch Vergleichen unter Verwendung der Koordinationsinformationen und der positionellen Verbindungsinformationen, die in den Positionsinformationen der zweiten digitalen Karte enthalten sind.

**Revendications**

1. Système comportant un dispositif de transmission (30) ayant une première base de données de cartes numériques (32) et un dispositif de réception (40) ayant une deuxième base de données de cartes numériques (46) et spécifiant une deuxième section de route objet sur une deuxième carte numérique stockée dans la deuxième base de données de cartes numériques correspondant à une première section de route objet sur une première carte numérique stockée dans la première base de données de cartes numériques,
dans lequel le dispositif de transmission comporte :

une unité d'extraction de données de forme de route (33) destinée à extraire des données de forme de route formées de noeuds indiquant la première section de route objet à partir de la première base de données de cartes numériques ;
une unité d'extraction de données de forme de branche (34) destinée à sélectionner une branche reliée à la première section de route objet et à extraire des données de forme de branche formées de noeuds indiquant la branche à partir de la première base de données de cartes numériques ;
une unité de génération d'informations de position (35) destinée à générer des informations de position qui comportent :

des informations de coordonnées des noeuds formant les données de forme de route extraites ;
des informations de coordonnées des noeuds formant les données de forme de branche extraites ; et
des informations de position de liaison indiquant le nombre de noeuds à partir d'un point de départ des noeuds indiquant la section de route objet jusqu'à un noeud à une position reliée à la branche ; et
une unité de transmission (38) destinée à transmettre les informations de position générées ; et
dans lequel le dispositif de réception (40) comporte :

une unité de réception (41) destinée à recevoir les informations de position ; et
une unité de spécification (47-49) destinée à spécifier une position de la deuxième section de route objet et une branche reliée à la deuxième section de route objet correspondant à la première section de route objet et la branche reliée à la première section de route objet par mise en correspondance, en utilisant les informations de coordonnées et les informations de position de liaison incluses dans les informations de position sur la deuxième carte numérique.

2. Dispositif de transmission (30) ayant une première base de données de cartes numériques (32) et adapté pour transmettre des informations de position à un dispositif de réception (40) ayant une deuxième base de données de cartes numériques (46) pour spécifier une deuxième section de route objet sur une deuxième carte numérique stockée dans la deuxième base de données de cartes numériques correspondant à une première section de route objet sur une première carte numérique stockée dans la première base de données de cartes numériques, le dispositif de transmission comprenant :

une unité d'extraction de données de forme de route (33) destinée à extraire des données de forme de route formées de noeuds indiquant la première section de route objet à partir de la première base de données de cartes numériques ;
une unité d'extraction de données de forme de branche (34) destinée à sélectionner une branche reliée à la première section de route objet et à extraire des données de forme de branche formées de noeuds indiquant la branche à partir de la première base de données de cartes numériques ;
une unité de génération d'informations de position (35) destinée à générer des informations de position qui comportant :

des informations de coordonnées des noeuds formant les données de forme de route extraites ;
des informations de coordonnées des noeuds formant les données de forme de branche extraites ; et
des informations de position de liaison indiquant le nombre de noeuds à partir d'un point de départ des noeuds indiquant la section de route objet jusqu'à un noeud à une position reliée à la branche ; et
une unité de transmission (38) destinée à transmettre les informations de position générées au dispositif de réception.

3. Dispositif de réception (40) ayant une deuxième base de données de cartes numériques (46), adapté pour recevoir des informations de position ayant la structure des informations de position telles que transmises par un dispositif de transmission selon la revendication 2 et spécifiant une deuxième section de route objet sur une deuxième carte numérique stockée dans la deuxième base de données de cartes numériques correspondant à une première section de route objet sur une première carte numérique, le dispositif de réception comprenant :

une unité de réception (41) destinée à recevoir les informations de position telles que transmises par le dispositif de transmission selon la revendication 2, lesdites informations de position comportant
des informations de coordonnées des noeuds formant les données de forme de route extraites ;
des informations de coordonnées des noeuds formant les données de forme de branche extraites ; et
des informations de position de liaison indiquant le nombre de noeuds à partir d'un point de départ des noeuds indiquant la section de route objet jusqu'à un noeud à une position reliée à la branche ; et
une unité de spécification (47-49) destinée à spécifier une position de la deuxième section de route objet et une branche reliée à la deuxième section de route objet correspondant à la première section de route objet et la branche reliée à la première section de route objet par mise en correspondance, en utilisant les informations de coordonnées et les informations de position de liaison incluses dans les informations de position sur la deuxième carte numérique.

4. Procédé de transmission exécuté par un ordinateur d'un dispositif de transmission (30) ayant une première base de données de cartes numériques (32) et adapté pour transmettre des informations de position à un dispositif de réception (40) ayant une deuxième base de données de cartes numériques (46) pour spécifier une deuxième section de route objet sur une deuxième carte numérique stockée dans la deuxième base de données de cartes numériques correspondant à une première section de route objet sur une première carte numérique stockée dans la première base de données de cartes numériques, le procédé de transmission comprenant :

une étape qui consiste à extraire des données de forme de route formées de noeuds indiquant la première section de route objet à partir de la première base de données de cartes numériques ;
une étape qui consiste à sélectionner une branche reliée à la première section de route objet et à extraire des données de forme de branche formées de noeuds indiquant la branche à partir de la première base de données de cartes numériques ;
une étape qui consiste à générer des informations de position qui comportent :

des informations de coordonnées des noeuds formant les données de forme de route extraites ;
des informations de coordonnées des noeuds formant les données de forme de branche extraites ; et
des informations de position de liaison indiquant le nombre de noeuds à partir d'un point de départ des noeuds indiquant la section de route objet jusqu'à un noeud à une position reliée à la branche ; et
une étape qui consiste à transmettre les informations de position générées au dispositif de réception.

5. Procédé de réception exécuté par un ordinateur d'un dispositif de réception (40) ayant une deuxième base de données de cartes numériques (46) et spécifiant une deuxième section de route objet sur une deuxième carte numérique stockée dans la deuxième base de données de cartes numériques correspondant à une première section de route objet sur une première carte numérique en recevant des informations de position ayant la structure des informations de position telles que transmises par le procédé de transmission selon la revendication 4, le procédé de réception comprenant :

une étape qui consiste à recevoir les informations de position telles que transmises par le procédé de transmission selon la revendication 4, lesdites informations de position comportant
des informations de coordonnées des noeuds formant les données de forme de route extraites ;
des informations de coordonnées des noeuds formant les données de forme de branche extraites ; et
des informations de position de liaison indiquant le nombre de noeuds à partir d'un point de départ des noeuds indiquant la section de route objet jusqu'à un noeud à une position reliée à la branche ; et
une étape qui consiste à spécifier une position de la deuxième section de route objet et une branche reliée à la deuxième section de route objet correspondant à la première section de route objet et la branche reliée à la première section de route objet par mise en correspondance, en utilisant les informations de coordonnées et les informations de position de liaison incluses dans les informations de position sur la deuxième carte numérique.

6. Programme de transmission amenant un ordinateur d'un dispositif de transmission (30) ayant une première base de données de cartes numériques (32) à exécuter des procédures pour la transmission d'informations de position à un dispositif de réception (40) ayant une deuxième base de données de cartes numériques (46) pour spécifier une deuxième section de route objet sur une deuxième carte numérique stockée dans la deuxième base de données de cartes numériques correspondant à une première section de route objet sur une première carte numérique stockée dans la première base de données de cartes numériques, la procédure comprenant :

une étape qui consiste à extraire des données de forme de route formées de noeuds indiquant la première section de route objet à partir de la première base de données de cartes numériques ;
une étape qui consiste à sélectionner une branche reliée à la première section de route objet et à extraire des données de forme de branche formées de noeuds indiquant la branche à partir de la première base de données de cartes numériques ;
une étape qui consiste à générer des informations de position qui comportent :

des informations de coordonnées des noeuds formant les données de forme de route extraites ;
des informations de coordonnées des noeuds formant les données de forme de branche extraites ; et
des informations de position de liaison indiquant le nombre de noeuds à partir d'un point de départ des noeuds indiquant la section de route objet jusqu'à un noeud à une position reliée à la branche ; et
une étape qui consiste à transmettre les informations de position générées au dispositif de réception.

7. Programme de réception amenant un ordinateur d'un dispositif de réception (40) ayant une deuxième base de données de cartes numériques (46) à exécuter une procédure pour la spécification d'une deuxième section de route objet sur une deuxième carte numérique stockée dans la deuxième base de données de cartes numériques correspondant à une première section de route objet sur une première carte numérique et une procédure pour la réception d'informations de position telles que transmises par l'exécution du programme de transmission selon la revendication 6, lesdites informations de position comportant
des informations de coordonnées des noeuds formant les données de forme de route extraites ;
des informations de coordonnées des noeuds formant les données de forme de branche extraites ; et
des informations de position de liaison indiquant le nombre de noeuds à partir d'un point de départ des noeuds indiquant la section de route objet jusqu'à un noeud à une position reliée à la branche, la procédure comprenant :

une étape qui consiste à recevoir les informations de position transmises par l'exécution du programme selon la revendication 6 ; et
une étape qui consiste à spécifier une position de la deuxième section de route objet et une branche reliée à la deuxième section de route objet correspondant à la première section de route objet et la branche reliée à la première section de route objet par mise en correspondance, en utilisant les informations de coordonnées et les informations de position de liaison incluses dans les informations de position sur la deuxième carte numérique.

## FIG. 1A

CONNECTION ROAD 12d

11

CONNECTION ROAD 12c

CONNECTION ROAD 12a

CONNECTION ROAD 12b

10

101

102

## FIG. 1B

101

UPSTREAM

20

DOWNSTREAM

EP 1 653 427 B1

## FIG. 2A

CONNECTION ROAD 12d

CONNECTION ROAD 12a

CONNECTION ROAD 12c

CONNECTION ROAD 12b

101

102

10

11

## FIG. 2B

UPSTREAM

101

20

DOWNSTREAM

EP 1 653 427 B1

# FIG. 3

FIG. 4A

FIG. 4B

CANDIDATE 1

CANDIDATE 2

12d'

12c'

10'

## FIG. 5A

CANDIDATE 1

## FIG. 5B

CANDIDATE 2

# FIG. 6A

# FIG. 6B

CANDIDATE 1

CANDIDATE 2

*FIG. 7A*

*FIG. 7B*

CANDIDATE 1

CANDIDATE 2

*FIG. 8A*　　　*FIG. 8B*　　　*FIG. 8C*

ORIGINAL SHAPE　　　CANDIDATE 1　　　CANDIDATE 2

FIG. 9A

FIG. 9B

ORIGINAL SHAPE

CANDIDATE 2

FIG. 10

BRANCH 2

BRANCH 1

BRANCH 3

TRUNK

FIG. 11

INFORMATION TRANSMISSION DEVICE

37

36 — DATA STORAGE UNIT

38 — SHAPE DATA RECEPTION UNIT

35 — VARIABLE LENGTH ENCODING UNIT

34 — BRANCH SHAPE DATA EXTRACTION UNIT

33 — SHAPE DATA EXTRACTION UNIT

32 — DIGITAL MAP DATABASE A

31 — EVENT/ MEASUREMENT INFORMATION INPUT UNIT

30

INFORMATION APPLICATION DEVICE
(NAVI, PROBE INFORMATION COLLECTION CENTER ETC.

40

50 — INFORMATION APPLICATION UNIT

49 — EVALUATION VALUE CALCULATION/ OBJECT ROAD DECISION UNIT

47 — TRUNK SHAPE CANDIDATE SELECTION UNIT

48 — BRANCH SHAPE CANDIDATE SELECTION UNIT

46 — DIGITAL MAP DATABASE B

44 — TRUNK SHAPE DATA EXTRACTION UNIT

45 — BRANCH SHAPE DATA EXTRACTION UNIT

43 — SHAPE DATA DECODING UNIT

42 — ENCODED DATA DECODING UNIT

41 — SHAPE DATA RECEPTION UNIT

EP 1 653 427 B1

# FIG. 12

```
                    ┌──────────────┐
                    │    START     │
                    └──────┬───────┘
                           │
  ┌────────────────────────┤
  │   ┌───────────────────────────────────────────────┐  St.1
  │   │ CREATE SHAPE DATA TO NEXT BRANCHING POINT      │
  │   └───────────────────────┬───────────────────────┘
  │                           │
  │                     St.2  │
  │              ╱─────────────────────╲         NO
  │             ╱   CREATION OF          ╲──────────────┐
  │             ╲ BRANCH SHAPE NECESSARY ╱              │
  │              ╲        ?             ╱               │
  │               ╲───────────────────╱                │
  │                         │ YES                       │
  │                         │                    St.3   │
  │   ┌───────────────────────────────────────────────┐│
  │   │       ENCODE BRANCH INFORMATION               ││
  │   └───────────────────────┬───────────────────────┘│
  │                           │◄───────────────────────┘
  │                           │
  │                     St.4  │
  │  NO          ╱─────────────────────╲
  └─────────────╱   TERMINAL END OF     ╲
                ╲  SHAPE DATA REACHED   ╱
                 ╲        ?            ╱
                  ╲──────────────────╱
                           │ YES
                    ┌──────┴───────┐
                    │     END      │
                    └──────────────┘
```

# FIG. 13

## FIG. 14

| VECTOR DATA TYPE: (= ROAD) |
|---|
| SHAPE DATA NO.: (#1) |
| DISCRIMINATION OF TRUNK/BRANCH: (TRUNK) |
| TOTAL OF NODES: 9 |
| ABSOLUTE COORDINATES OF NODE 1 IN X DIRECTION: (LONGITUDE) |
| ABSOLUTE COORDINATES OF NODE 1 IN Y DIRECTION: (LATITUDE) |
| RELATIVE COORDINATES OF NODE 2 IN X DIRECTION |
| RELATIVE COORDINATES OF NODE 2 IN Y DIRECTION |
| ∫ |
| RELATIVE COORDINATES OF NODE 9 IN X DIRECTION |
| RELATIVE COORDINATES OF NODE 9 IN Y DIRECTION |
| SHAPE DATA NO.: (#2) |
| DISCRIMINATION OF TRUNK/BRANCH: (BRANCH) |
| REFERENCE SHAPE DATA NO.: (#1) |
| NODE NO. FROM STARTING END OF SHAPE DATA REFERRED: 5 |
| TOTAL OF NODES: 5 |
| RELATIVE COORDINATES OF NODE 1 IN X DIRECTION |
| RELATIVE COORDINATES OF NODE 1 IN Y DIRECTION |
| ∫ |
| RELATIVE COORDINATES OF NODE 5 IN X DIRECTION |
| RELATIVE COORDINATES OF NODE 5 IN Y DIRECTION |

REFERENCE ROAD SHAPE DATA: (TRUNK)

BRANCH SHAPE DATA

## FIG. 15

```
                    ┌──────────────────┐
                    │      START       │
                    └──────────────────┘
                             │
                             ▼
        ┌─────────────────────────────────────────┐   St.10
        │ IDENTIFY TRUNK INFORMATION, AND CALCULATE │
        │  EVALUATION VALUE OF EACH CANDIDATE ROAD  │
        └─────────────────────────────────────────┘
                             │
                             ▼                St.11
                    ◇─────────────────◇         NO
                   ⟨ BRANCH INFORMATION? ⟩─────────────┐
                    ◇─────────────────◇                │
                             │ YES                     │
                             ▼                         │
        ┌─────────────────────────────────────────┐   St.12
        │   SET ROAD TENTATIVELY DETERMINED FOR     │
        │   EACH CANDIDATE, AS NON-OBJECT ROAD OF   │
        │           BRANCH INFORMATION              │
        └─────────────────────────────────────────┘   │
                             │                         │
                             ▼                         │
        ┌─────────────────────────────────────────┐   St.13
        │      IDENTIFY EACH CANDIDATE WITH BRANCH   │
        │  INFORMATION, AND SELECT BRANCH CANDIDATE  │
        └─────────────────────────────────────────┘   │
                             │                         │
                             ▼                         │
        ┌─────────────────────────────────────────┐   St.14
        │ CALCULATE SYNTHETIC EVALUATION VALUE OF   │
        │   EACH CANDIDATE FROM BOTH TRUNK AND      │
        │           BRANCH INFORMATION              │
        └─────────────────────────────────────────┘   │
                             │◄────────────────────────┘
                             ▼                      St.15
        ┌─────────────────────────────────────────┐
        │ SELECT CANDIDATE OF HIGHEST EVALUATION VALUE │
        └─────────────────────────────────────────┘
                             │
                             ▼
                    ┌──────────────────┐
                    │       END        │
                    └──────────────────┘
```

FIG. 16A          FIG. 16B          FIG. 16C

ORIGINAL SHAPE          CANDIDATE 1          CANDIDATE 2

FIG. 17B

FIG. 17A

FIG. 18A

FIG. 18B

FIG. 18C

ORIGINAL SHAPE     CANDIDATE 1     CANDIDATE 2

## FIG. 19A

## FIG. 19B

| |
|---|
| VECTOR DATA TYPE (= ROAD) |
| SHAPE DATA NO.: (#1) |
| DISCRIMINATION OF BRANCH INFORMATION: YES |
| TOTAL OF NODES: 9 |
| ABSOLUTE COORDINATES OF NODE 1 IN X DIRECTION: (LONGITUDE) |
| ABSOLUTE COORDINATES OF NODE 1 IN Y DIRECTION: (LATITUDE) |
| RELATIVE COORDINATES OF NODE 2 IN X DIRECTION |
| RELATIVE COORDINATES OF NODE 2 IN Y DIRECTION |
| |
| RELATIVE COORDINATES OF NODE 9 IN Y DIRECTION |

SHAPE DATA
OF TRUNK

| | |
|---|---|
| NUMBER OF NODES WITH BRANCH INFORMATION: 1 | |
| OBJECT NODE L NO.: 5 | |
| BRANCH NUMBER OF NODE L: 1 | NUMBER OF RADII: 5 |
| RADIUS: r1 | |
| VECTOR OF BRANCH ROAD 1: PQ | |
| RADIUS: r2 | |
| VECTOR OF BRANCH ROAD 1: PQ | |
| | |
| RADIUS: r5 | |
| VECTOR OF BRANCH ROAD 1: PQ | |

SHAPE DATA
OF BRANCH

## FIG. 20A

## FIG. 20B

| |
|---|
| VECTOR DATA TYPE: (= ROAD) |
| SHAPE DATA NO.: (#1) |
| DISCRIMINATION OF TRUNK/BRANCH: (TRUNK) |
| TOTAL OF NODES: 9 |
| ABSOLUTE COORDINATES OF NODE 1 IN X DIRECTION: (LONGITUDE) |
| ABSOLUTE COORDINATES OF NODE 1 IN Y DIRECTION: (LATITUDE) |
| RELATIVE COORDINATES OF NODE 2 IN X DIRECTION |
| RELATIVE COORDINATES OF NODE 2 IN Y DIRECTION |
| ( |
| RELATIVE COORDINATES OF NODE 9 IN X DIRECTION |
| RELATIVE COORDINATES OF NODE 9 IN Y DIRECTION |
| SHAPE DATA NO.: (#2) |
| DISCRIMINATION OF TRUNK/BRANCH: (BRANCH) |
| SHAPE DATA NO. REFERRED: (#1) |
| NODE NO. FROM STARTING END OF SHAPE DATA REFERRED: 5 |
| TOTAL NUMBER OF NODES: 5 |
| ANGULAR DIFFERENCE FROM TRUNK SHAPE AZIMUTH OF ONE NODE: θ |
| DISTANCE OF NODE 1 |
| DEFLECTION ANGLE OF NODE 2 |
| DISTANCE OF NODE 2 |
| ( |
| DEFLECTION ANGLE OF NODE 5 |
| DISTANCE OF NODE 5 |

ROAD SHAPE DATA REFERRED: (TRUNK)

BRANCH SHAPE DATA

FIG. 21A

FIG. 21B

FIG. 21C

ORIGINAL SHAPE

CANDIDATE 1

CANDIDATE 2

# FIG. 22A

# FIG. 22B

| | |
|---|---|
| VECTOR DATA TYPE: (= ROAD) | |
| SHAPE DATA NO.: (#1) | REFERENCE ROAD SHAPE DATA: (TRUNK) |
| DISCRIMINATION OF TRUNK/BRANCH: (TRUNK) | |
| ENCODING METHOD/PARAMETERS | |
| SAMPLE SECTION LENGTH: L1 (m) | |
| TOTAL NUMBER OF NODES: 9 | |
| ABSOLUTE COORDINATES OF NODE 1 IN X DIRECTION: (LONGITUDE) | |
| ABSOLUTE COORDINATES OF NODE 1 IN Y DIRECTION: (LATITUDE) | |
| ABSOLUTE AZIMUTH BETWEEN NODE 1 ? 2 | |
| ENCODED DATA OF SHAPE (ENCODED BIT STRING OF DEFLECTION ANGLE $\theta j$ OR DIFFERENTIAL VALUE $\Delta\theta j$ OF STATISTICAL PREDICTED VALUE) | |
| SHAPE DATA NO.: (#2) | BRANCH SHAPE DATA |
| DISCRIMINATION OF TRUNK/BRANCH: (BRANCH) | |
| SHAPE DATA NO. REFERRED: (#1) | |
| ENCODING METHOD/PARAMETERS | |
| SAMPLE SECTION LENGTH: L2 (m) | |
| NODE NO. FROM STARTING END OF REFERENCE SHAPE DATA: 4 | |
| TOTAL NUMBER OF NODES: 6 | |
| DEFLECTION ANGLE $\theta$ FROM AZIMUTH OF TRUNK: $\theta$ | |
| DISTANCE FROM REFERENCE NODE TO BRANCH STARTING POSITION | |
| ENCODED DATA OF SHAPE (ENCODED BIT STRING OF DEFLECTION ANGLE $\theta j$ OR DIFFERENTIAL VALUE $\Delta\theta j$ OF STATISTICAL PREDICTED VALUE) | |

# FIG. 23

MAP A                    MAP B

EDOBASHI JCT            EDOBASHI JCT

## FIG. 24

```
                    ┌─────────────┐
                    │    START    │
                    └──────┬──────┘
                           │
       ┌───────────────────▼───────────────────┐  St.20
       │ CONDUCT LOCATION IDENTIFICATION WITH TRUNK │
       │ INFORMATION, AND DETERMINE TRUNK CANDIDATE │
       └───────────────────┬───────────────────┘
                           │              St.21
                     ◇─────▼─────◇           NO
                  ◇   BRANCH INFORMATION   ◇──────────┐
                     ◇   EXISTS?   ◇                  │
                           │                          │
                          YES                         │
       ┌───────────────────▼───────────────────┐  St.22  │
       │   IDENTIFY EACH CANDIDATE WITH BRANCH   │        │
       │ INFORMATION, AND SELECT BRANCH CANDIDATE │        │
       └───────────────────┬───────────────────┘        │
                           │                          │
       ┌───────────────────▼───────────────────┐  St.23  │
       │ SEARCH BRANCHING PORTION AT PERIPHERY,  │        │
       │     AND CORRECT TRUNK/BRANCH SHAPE      │        │
       └───────────────────┬───────────────────┘        │
                           │                          │
       ┌───────────────────▼───────────────────┐  St.24  │
       │ CALCULATE SYNTHETIC EVALUATION VALUE OF │        │
       │   EACH CANDIDATE FROM BOTH TRUNK AND    │        │
       │           BRANCH INFORMATION            │        │
       └───────────────────┬───────────────────┘        │
                           │◄─────────────────────────────┘
       ┌───────────────────▼───────────────────┐  St.25
       │ SELECT CANDIDATE OF HIGHEST EVALUATION VALUE │
       └───────────────────┬───────────────────┘
                           │
                    ┌──────▼──────┐
                    │     END     │
                    └─────────────┘
```

## FIG. 25A

MAP A

MAP B

PLACE WITH BRANCHING
PORTION IN SHAPE DATA

SEARCH BRANCHING
SHAPE AT PERIPHERY OF
BRANCH CANDIDATE

SEARCH BRANCHING
PORTION AT PERIPHERY
OF TRUNK

## FIG. 25B

MAP B

MAP A

CANDIDATE DELETE

EP 1 653 427 B1

## FIG. 26

START

↓

St.30

SUPERPOSED PORTION EXISTS IN CANDIDATES OF EACH TRUNK/BRANCH AFTER LOCATION IDENTIFICATION?

YES (left) → St.31

YES (right) → St.33

NO / NO

**St.31** — BRANCHING PORTION BETWEEN TRUNK AND BRANCH ON EXTENSION OF BRANCH EXISTS?

YES → St.32

EXTEND BRANCH CANDIDATE TO BRANCHING PORTION AND MOVE BRANCHING PORTION

**St.33** — BRANCHING PORTION ON SUPERPOSED ROAD OF TRUNK/BRANCH EXISTS?

YES → St.34

MOVE BRANCHING PORTION OF TRUNK/ BRANCH CANDIDATE, AND DELETE SUPERPOSED PORTION OF BRANCH CANDIDATE

CORRECT LOCATION OF EVENT INFORMATION (TRAFFIC INFORMATION OR POI) WITH CONSIDERING BRANCHING POSITION — St.35

↓

END

EP 1 653 427 B1

## FIG. 27A

BRANCHING
SHAPE

BRANCHING
POSITION

OBJECT ROAD

PASSING-PROHIBITED
EVENT

NO BRANCHING
SHAPE OR NO
CORRECTION OF
BRANCHING
POSITION

MAKE
CORRECTION
CONSIDERING
BRANCHING
POSITION

## FIG. 27B

EDOBASHI JCT

## FIG. 27C

EDOBASHI JCT

EP 1 653 427 B1

## FIG. 28A

ROAD SECTION TO BE SPECIFIED

EDOBASHI JCT

BRANCHING SHAPE

ROAD CONNECTED TO SECTION TO BE SPECIFIED

## FIG. 28B

EDOBASHI JCT

## FIG. 29

```
                    ┌─────────────┐
                    │    START    │
                    └──────┬──────┘
                           │
    ┌──────────────────────▼──────────────────────┐  St.41
    │  CREATE SHAPE DATA TO NEXT BRANCHING POINT   │
    └──────────────────────┬──────────────────────┘
                           │              St.42
                     ◇─────▼─────◇           NO
                    ╱  CREATION OF  ╲──────────────┐
                   ╱ BRANCH SHAPE    ╲             │
                   ╲  NECESSARY ?    ╱             │
                    ╲───────┬───────╱              │
                           │ YES                   │
                           │              St.43    │
    ┌──────────────────────▼──────────────────────┐│
    │        ENCODE BRANCH INFORMATION            ││
    └──────────────────────┬──────────────────────┘│
                           │              St.44     │
           NO        ◇─────▼─────◇                 │
    ┌────────────────╱  TERMINAL   ╲◀──────────────┘
    │               ╱ END OF SHAPE   ╲
    │               ╲ DATA REACHED ? ╱
    │                ╲───────┬───────╱
    │                       │ YES
    │                       │              St.45
    │                 ◇─────▼─────◇           NO
    │                ╱  BRANCHING    ╲──────────────┐
    │               ╱ POINT TO FORM   ╲             │
    │               ╲ BRANCHING SHAPE ╱             │
    │               ╲ ACROSS SHAPE   ╱              │
    │                ╲ DATA ?       ╱               │
    │                 ╲─────┬──────╱                │
    │                      │ YES                    │
    │                      │              St.46      │
    │   ┌──────────────────▼──────────────────┐     │
    │   │ ADD SHAPE DATA OF SPECIFIED DISTANCE │     │
    │   │ ALONG ROAD, AND ENCODE BRANCH SHAPE  │     │
    │   └──────────────────┬──────────────────┘     │
    │                      │◀──────────────────────┘
    │                ┌─────▼─────┐
    │                │    END    │
    │                └───────────┘
```

St.41 — CREATE SHAPE DATA TO NEXT BRANCHING POINT

St.42 — CREATION OF BRANCH SHAPE NECESSARY ?  —  NO / YES

St.43 — ENCODE BRANCH INFORMATION

St.44 — TERMINAL END OF SHAPE DATA REACHED ?  —  NO / YES

St.45 — BRANCHING POINT TO FORM BRANCHING SHAPE ACROSS SHAPE DATA ?  —  NO / YES

St.46 — ADD SHAPE DATA OF SPECIFIED DISTANCE ALONG ROAD, AND ENCODE BRANCH SHAPE

## FIG. 30A

## FIG. 30B

SHAPE VECTOR DATA STRING

| SHAPE VECTOR SERIES DISCRIMINATION NO. = 1 |
| --- |
| VECTOR DATA TYPE (= ROAD) |
| TOTAL NUMBER OF NODES: N |
| NODE NO.: p1 |
| ABSOLUTE COORDINATES OF NODE p1 IN X DIRECTION: (LONGITUDE) |
| ABSOLUTE COORDINATES OF NODE p1 IN Y DIRECTION: (LATITUDE) |
| NODE NO.: p2 |
| RELATIVE COORDINATES OF NODE p2 IN X DIRECTION: (x2) |
| RELATIVE COORDINATES OF NODE p2 IN Y DIRECTION: (y2) |
| ⌇ |
| NODE NO.: pN |
| RELATIVE COORDINATES OF NODE pN IN X DIRECTION: (xn) |
| RELATIVE COORDINATES OF NODE pN IN Y DIRECTION: (yn) |

## FIG. 31A

## FIG. 31B

ADDITIONAL INFORMATION

| |
|---|
| ROAD TYPE CODE |
| ROAD NO. |
| INTERSECTION INFORMATION: 1 |
| NODE NO.: p6 |
| CONNECTION LINK NO. OF NODE p6: 2 |
| CONNECTION LINK ANGLE OF NODE p6: $\alpha 1$ |
| CONNECTION LINK ANGLE OF NODE p6: $\alpha 2$ |

EP 1 653 427 B1

FIG. 32A

FIG. 32B

CONNECTION ROAD
12d

CONNECTION ROAD
12a

CONNECTION ROAD
12c

CONNECTION ROAD
12b

101

102

10

11

CONNECTION ROAD
12d

CONNECTION ROAD
12a

CONNECTION ROAD
12c

CONNECTION ROAD
12b

101

102

10

11

## FIG. 33

EP 1 653 427 B1

## FIG. 35

## FIG. 36

| |
|---|
| VECTOR DATA TYPE: (= ROAD) |
| ⟩ |
| SHAPE DATA NO.: (#N) |
| DISCRIMINATION OF TRUNK/BRANCH |
| TOTAL NUMBER OF NODES |
| ATTRIBUTE INFORMATION (ADVANCING DIRECTION ETC.) OF ENTIRE TRUNK SHAPE DATA |
| ABSOLUTE COORDINATES OF NODE 1 IN X DIRECTION: (LONGITUDE) |
| ABSOLUTE COORDINATES OF NODE 1 IN Y DIRECTION: (LATITUDE) |
| ATTRIBUTE INFORMATION OF NODE 1 (TYPE/NO./NAME/ALTITUDE ETC.) |
| RELATIVE AZIMUTH OF NODE 2 IN X DIRECTION |
| RELATIVE AZIMUTH OF NODE 2 IN Y DIRECTION |
| ATTRIBUTE OF NODE 2 |
| ⟩ |
| SHAPE DATA NO.: (#N+1) |
| DISCRIMINATION OF TRUNK/BRANCH |
| REFERENCE SHAPE DATA NO. |
| NODE NO. FROM STARTING END OF REFERENCE SHAPE DATA |
| TOTAL NUMBER OF NODES |
| ATTRIBUTE INFORMATION (ADVANCING DIRECTION ETC.) OF ENTIRE BRANCH SHAPE DATA |
| RELATIVE AZIMUTH OF NODE 1 IN X DIRECTION |
| RELATIVE AZIMUTH OF NODE 1 IN Y DIRECTION |
| ATTRIBUTE INFORMATION OF NODE 1 (TYPE/NO./NAME/ALTITUDE ETC.) |
| ⟩ |
| SHAPE DATA NO.: (#M) |
| ⟩ |

REFERENCE ROAD SHAPE DATA: (TRUNK)

BRANCH SHAPE DATA

## FIG. 37A

301a

303

304a

304b

STARTING END

301b

304c

301c

302

TERMINAL END

## FIG. 37B

303

STARTING END

TERMINAL END

EP 1 653 427 B1

62

## FIG. 38A

303

## FIG. 38B

303a

STARTING END

TERMINAL END

EP 1 653 427 B1

FIG. 39

OBJECT ROAD

PARALLEL ROAD 1 (HIGHWAY)

PARALLEL ROAD 2 (BYPASS)

FIG. 40

## FIG. 41

START

S51 — EXTRACT OBJECT ROAD

S52 — CREATE SHAPE DATA TO NEXT BRANCHING POINT

S53 — ABSENCE PROBABILITY OF OBJECT ROAD ON RECEPTION SIDE IS HIGH? — NO

"HIGH ABSENCE PROBABILITY ON RECEPTION DEVICE IS DECIDED, IF OBJECT ROAD IS TO BE OPENED WITHIN N YEARS OR IF ROAD IS PRIVATE OR BELONGS TO FACILITIES."

YES

S54 — PRESENCE PROBABILITY OF CONNECTION ROAD ON RECEPTION SIDE IS HIGH? — NO

YES

S55 — ENCODE BRANCH INFORMATION

S56 — TERMINAL END OF SHAPE DATA REACHED ? — NO

YES

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001041757 A
- JP 2001066146 A
- JP 2003023357 A
- WO 0118769 A
- WO 01018769 A
- JP 2003285807 A
- JP 2004028040 A